# EUROPÄISCHE PATENTSCHRIFT

(11) **EP 4 409 443 B1**
(45) Veröffentlichungstag und Bekanntmachung des Hinweises auf die Patenterteilung: **22.04.2026**
(21) Anmeldenummer: 22760649.8
(22) Anmeldetag: 11.08.2022
(51) Int. Cl.: G06F 21/31

(54) **VERFAHREN ZUR DURCHFÜHRUNG EINES AUTHENTISIERUNGSPROZESSES DURCH EINEN INDIVIDUELLEN SYSTEMBENUTZER**
METHOD FOR THE PERFORMANCE OF AN AUTHENTICATION PROCESS BY AN INDIVIDUAL SYSTEM USER
PROCÉDÉ DE RÉALISATION D'UN PROCESSUS D'AUTHENTIFICATION PAR UN UTILISATEUR D'UN SYSTÈME INDIVIDUEL

(30) Priorität: 01.10.2021 DE 102021125572
(43) Veröffentlichungstag der Anmeldung: 07.08.2024
(73) Patentinhaber: Leibrecht, Uwe, 55286 Wörrstadt (DE); Weber-Leibrecht, Kirstin, 55286 Wörrstadt (DE)
(72) Erfinder: Leibrecht, Uwe, 55286 Wörrstadt (DE); Weber-Leibrecht, Kirstin, 55286 Wörrstadt (DE)
(74) Vertreter: Mackert, Andreas
(86) Internationale Anmeldenummer: PCT/DE2022/100591
(87) Internationale Veröffentlichungsnummer: WO 2023/051859

(56) Entgegenhaltungen:
- EP-A1- 3 229 163
- US-A1- 2016 006 730
- US-A1- 2018 219 859

## Beschreibung

### Technisches Gebiet

Die Erfindung beschreibt ein Verfahren zur Mensch-Maschinen-Authentisierung, das den individuellen Systembenutzer als ein wesentliches Systemelement definiert. Zur begrifflichen Einordnung im Sinne dieser Anmeldung, ist unter der Authentisierung das Nachweisen einer Identität zu verstehen in Abgrenzung zur Authentifizierung, was die Prüfung dieses Identitätsnachweises auf seine Authentizität bezeichnet. Als Ergebnis bezeichnet die resultierende Autorisierung die hieraus folgende Zugangsgewährung nach der erfolgreich nachgewiesenen Identität. Die Erfindung ist dazu geeignet in bestehende Systeme integriert zu werden. Die Sicherheit eines Systems wird durch Eingabe eines Authentisierungscodes erhöht, den der individuelle Systembenutzer nach Aufforderung durch das System eingeben muss. Dabei stellt das Verfahren die kognitive Leistungsfähigkeit des individuellen Systembenutzers in den Fokus und zeigt auf, wie dieser wertvolle individuelle menschliche Faktor in einen technischen Authentisierungsprozess zur Erhöhung der Sicherheit eingebunden werden kann. Die kognitive Leistungsfähigkeit im Sinne dieser Erfindung umfasst beispielsweise die Wahrnehmung, Aufmerksamkeit, Gedächtnisleistung sowie Lern- und Problemlösefähigkeit, Umstellfähigkeit, exekutive Funktionen und kognitive Flexibilität.

Jeder individuelle Systembenutzer hat individuelle geistige Fähigkeiten. Diese können beim Authentisierungsvorgang unabhängig von der Komplexität einer System-Implementierung einen wichtigen Beitrag zur Sicherheit eines Systems leisten. Die Erfindung beschreibt ein Verfahren, wie dieses menschliche Potenzial zur Erhöhung der Sicherheit in technischen Systemen nutzbar gemacht wird.

Die Erfindung nutzt technische Elemente / Hilfsmittel auf Basis bekannter kryptografischer Techniken und Prinzipien (vgl. [014]). Die Systembenutzer wenden diese ad hoc beim Authentisierungsprozess an. Dabei sind keine tieferen Kenntnisse der Kryptografie, Informatik oder Mechanik beim individuellen Systembenutzer erforderlich. Verfahrensimmanent und von zentraler Bedeutung ist die geistige Leistungsfähigkeit des individuellen Systembenutzers bei der Systemnutzung. Sie steht im Mittelpunkt des Authentisierungsprozesses. Die Nutzung der kognitiven Leistungsfähigkeit des individuellen Systembenutzers ist das Kernelement, um den Authentisierungsprozess sicherer zu gestalten. Dabei hat der individuelle Systembenutzer individuelle Wahlmöglichkeiten. Je nach Sicherheitsbedürfnis und eigener Leistungsfähigkeit kann der individuelle Systembenutzer die Komplexität und somit den Sicherheitsstandard erhöhen.

### Stand der Technik

Zum grundlegenden Verfahren: Ein individueller Systembenutzer fordert den Zugriff auf eine von einem technischen System geschützte Aktion. Der hinterlegte Authentisierungscode wird vom individuellen Systembenutzer eingegeben und vom geschützten System verifiziert. Die weiteren Systemaktionen sind abhängig vom Ergebnis der Verifizierung.

Während der Eingabe können fremde Blicke, Kameras oder sogenannte Keylogger bzw. Tasten-Protokollierer ( Hard- oder Software, die dazu verwendet wird, die Eingaben des Benutzers an der Tastatur eines Computers zu protokollieren) diesen Authentisierungscode unmittelbar abgreifen und ungerechtfertigt wiederverwenden, wenn die öffentliche Eingabe des Authentisierungscodes 1:1 dem hinterlegten geheimen Authentisierungscode entspricht.

Der Authentisierungscode, der an eine Zertifizierungsstelle mittels Datenübertragung z.B. über das Internet gesendet wird, kann zwar verschlüsselt werden. Doch falls ein Angreifer oder unzulässiger Dritter diese Daten entschlüsselt, beinhalten diese entschlüsselten Daten dennoch 1:1 den hinterlegten Authentisierungscode.

Generell besteht immer ein erhöhtes Sicherheitsrisiko bei der Eingabe / Übermittlung des Authentisierungscodes zur Ausführung sicherheitskritischer Aktionen eines Systems oder bei einem sicherheitskritischen Vorgang, wenn Authentisierungscode und hinterlegter, sicherer und geheimer Authentisierungscode identisch sind.

Ebenso besteht ein erhöhtes Sicherheitsrisiko wenn der individuelle Systembenutzer nicht sicher sein kann, dass die Authentisierungscodeabfrage von einem legitimierten System gestellt wird, wobei hier das Stichwort Phishing gebräuchlich ist für beispielsweise gefälschte Webseiten, E-Mails oder Kurznachrichten als angeblich vertrauenswürdige Kommunikationspartner in einer elektronischen Kommunikation.

Um eine höhere Sicherheit des Systems bei einer Mensch-Maschinen-Authentisierung zu erzielen werden nach Stand der Technik meist weitere Software- und / oder HardwareKomponenten als zusätzliche Sicherheitsstufe in den Authentisierungsprozess eingebunden. Dazu zählen u.a.:
- das Mitführen und Administrieren weiterer Hardwarekomponenten (Token),
- der Einsatz weiterer Software (2FA, MFA) oder
- das Führen und Administrieren weiterer Listen (TAN, iTAN).

Unter "Token" ist hierbei eine Hard- oder Softwarekomponente zur Identifizierung und Authentifizierung von Benutzern zu verstehen meist als Bestandteil eines Systems der Zugriffskontrolle mit Zwei-Faktor-Authentisierung (2FA) als Identitätsnachweis eines Nutzers durch eine Kombination zweier unterschiedlicher und unabhängiger Komponenten (Faktoren), beispielsweise Bankkarte und PIN beim Geldautomaten. Als Multi-Faktor-Authentifizierung (MFA) wird diese Zugangsberechtigung durch mehrere unabhängige Merkmale (Faktoren) überprüft. Die Transaktionsnummer (TAN) oder indizierten Transaktionsnummer (iTAN) sind Einmalkennwort die vorwiegend im Online-Banking verwendet werden.

Das Aneinanderreihen von Verfahren oder Mechanismen, in denen vor- und / oder nachgeschaltete Sicherheitsstufen seriell durchlaufen werden, erhöht den Aufwand der betrieben werden muss, um im Falle einer legitimen Authentisierung zum eigentlichen Ziel zu gelangen. Ein individueller Systembenutzer als legitimer Systembenutzer muss dadurch, je nach Anzahl der Sicherheitsstufen, mehr Zeit und Energie aufwenden, um sein eigentliches Ziel zu erreichen.

Zusätzlich bleibt das Problem der unter [005 - 010] dargestellten 1:1 Zuordnung von Eingabecode und Authentisierungscode. Dieses besteht bei jedem einzelnen vor- und / oder nachgeschaltetem Glied der Sicherheitskette.

In den unter [005 - 011] dargelegten Beispielen wird der Mensch als bedeutender Faktor im Authentisierungsprozess zunehmend durch Technik ersetzt. Er muss verstärkt lediglich eine Ausgabe von Technik-Element-A an Technik-Element-B übermitteln, um zur nächsten Sicherheitsstufe zu gelangen. Eine Verlängerung der Sicherheitskette mittels Ergänzung weiterer Sicherheitsstufen mindert die Verinnerlichung (geistige Abspeicherung) des geheimen Authentisierungscodes. Ferner wird die Bedeutung des Menschen in der gesamten Sicherheitskette zunehmend vernachlässigt.

Es existieren Verfahren die die manuelle Eingabe des Authentisierungscodes dahingehend beeinflussen, dass die Anordnung der Tasten im Eingabemoment geändert wird. Dies erschwert Nutzern, die sich z.B. einen PIN-Code in Form eines Musters auf dem jeweiligen Eingabefeld merken, die Nutzung. Beispiele dazu sind u.a. folgende Veröffentlichungen:

| **Aktenzeichen** | **Kurzbeschreibung** |
|---|---|
| CH 713 015 A2 | Eingabevorrichtung und Verfahren |
| DE 296 13 938 U1 | Codeeingabesystem für Scheckkartenbezahlungssysteme und Geldautomaten |
| DE 10 2004 002 128 A1 | Vorrichtung und Verfahren von codierten und / oder nichtcodierten Befehlen |
| DE 10 2008 019 034 A1 | Verfahren und Vorrichtung zur Ermittlung eines Zugangscodes |
| DE 10 2009 020 207A1 | Eingabeterminal und Verfahren zur PIN-Erfassung |
| DE 10 2009 012 011A1 | Geheimzahlen- bzw. Passwort-Eingabesystem für den täglichen Gebrauch in Kaufhäusern zur Gewährleistung der Diskretion |

Im technischen Bereich der Kryptografie stehen bereits seit vielen Jahren umfangreiche Techniken, Verfahren und Standards zur Verfügung, um die Authentisierung an technischen Systemen sicherer zu machen und somit Angriffe auf technische Systeme zu erschweren.

Dazu zählen u.a.:
- Challenge-Response-Authentifizierung (Authentifizierungsverfahren eines Teilnehmers auf Basis von Wissen mittels einer Aufgabe (challenge), die der Teilnehmer lösen muss (response), um zu beweisen, dass er eine definierte Information (Shared Secret) kennt,
- Salt (Kryptographie eine zufällig gewählte Zeichenfolge, die an einen gegebenen Klartext vor dessen weiterer Verarbeitung (z. B. Eingabe in eine Hashfunktion) angehängt wird),
- Salted Challenge Response Authentication Mechanism (passwortbasierte Challenge-Response-Authentifizierungsmechanismen, die die Authentifizierung eines Benutzers gegenüber einem Server ermöglichen),
- Standard: ISO/IEC 9797 Message Authentication Codes [MACs] / Nachrichten-Authentisierungscodes [MACs] (um den Ursprung von Daten oder Nachrichten zu erhalten und ihre Integrität zu überprüfen),
- Message Authenticator Algorithm (MAA) (kryptographische Funktionen zur Berechnung eines Message Authentication Code (MAC)) oder
- Standard: ISO-IEC-9798 Entity authentication / Authentisierung von Instanzen (zur Bestätigung, dass eine Instanz tatsächlich die ist, die sie vorgibt zu sein).

Die Techniken und Lehren der unter [014] dargestellten etablierten Maschine-Maschine-Authentisierungsverfahren waren bisher aufgrund ihrer Komplexität nicht praktikabel auf Mensch-Maschinen-Authentisierungen übertragbar.

In der Veröffentlichung US 9 686 275 B2 wird eine Technik zur kontinuierlichen Benutzerauthentifizierung durch Echtzeit-Fusion und -Korrelation mehrerer Faktoren offenbart, wobei überwachte Daten von Benutzeraktionen kontinuierlich von einem Computer erhalten und von einem Server analysiert werden, um eine Reihe von Modalitäten auszuführen, um so den Benutzer authentifizieren zu können.

Aus der Publikation US 9 672 335 B2 ist ein Verfahren zur Benutzeranmeldung an einem Computer bekannt, das eine zusätzliche gedankengesteuerte Benutzerschnittstelle einführt, bei der der Benutzer auf eine oder mehrere Eingabeaufforderungen reagieren muss. Die Antworten des Benutzers auf diese Eingabeaufforderungen werden zur Bestimmung genutzt, ob der Benutzer das erforderliche Niveau an kognitiven Funktionen aufweist, um Zugriff auf das Computersystem zu erhalten oder eine aktive Anmeldesitzung fortzusetzen.

Die Schrift US 10 476 873 B2 offenbart Geräte, Systeme und Verfahren zum Erkennen von Benutzeridentitäten sowie für die passwortlose Benutzerauthentifizierung, wofür die Aufgabe optional eine Aufgabe zum Verbinden der Punkte auf dem Bildschirm ist. Das System überwacht Benutzerinteraktionen und benutzerspezifische Merkmale und stützt sich anschließend auf solche benutzerspezifischen Merkmale als Mittel zur Benutzerauthentifizierung.

Zudem ist aus der Veröffentlichung EP 1 010 049 B1 ein Verfahren zum Bereitstellen eines Benutzerzugriffes auf eine sichere Anwendung bekannt, bei dem als Authentisierungsanforderung an den Benutzer wenigstens ein Symbol angezeigt wird, der Benutzer Manipulationen am angezeigten Symbol vornimmt, so dass ein Codeschlüssel auf der Basis dieser Manipulationen am angezeigten Symbol erzeugt werden kann, mit dem der Benutzer in Verbindung mit gespeicherten Authentisierungsinformation ein Resultat zur Authentisierung erzeugen kann und ein Benutzerzugriff genehmigt wird, wenn das Resultat die Authentisierungsanforderungen der sicheren Anwendung unterstützt. Die folgenden Dokumente stellen ebenfalls relevanten Stand der Technik dar: US2018/219859A1, US2016/006730A1, EP3229163A1.

Vor diesem Hintergrund liegt die Aufgabe der vorliegenden Erfindung darin, ein Verfahren zur Durchführung eines Authentisierungsprozesses durch einen individuellen Systembenutzer zu schaffen unter zielführender und praktikabler Einbindung schneller ad hoc Berechnungen, wie diese von Maschinen zum Lösen kryptografischer Aufgaben durchgeführt werden können, die vom individuellen Systembenutzer abverlangt und so in den Authentisierungsprozess eingebunden werden. Diese Herausforderung ist der Kern der vorliegenden Erfindung.

### Offenbarung der Erfindung

### Vorteile der Erfindung

Die Erfindung stellt das Potenzial des individuellen Systembenutzers zur Erhöhung der Sicherheit in Authentisierungsprozessen in den Vordergrund und grenzt sich klar von rein maschinenbasierten Prozessen ab. Durch Einbeziehen der kognitiven Leistungsfähigkeit des individuellen Systembenutzers können viele aktuelle Sicherheitsprobleme im menschlich gebundenen Authentisierungsprozess gelöst werden. Die Erfindung bietet bestehenden und / oder neuen technischen Systemen ein "individuelles Mensch-Maschinen-Authentisierungsverfahren" an, welches:
1. kryptografisch ausgereifte / etablierte Sicherheitsmechanismen (vgl. [014]) ad hoc für Individuen anwendbar macht,
2. die individuellen kognitiven Fähigkeiten von Individuen zum Schutz der Systemsicherheit nutzt und diese technisch implementierbar macht,
3. skalierbar ist und individuell auf die kognitive Leistungsfähigkeit des individuellen Systembenutzers ausgerichtet werden kann. Der individuelle Systembenutzer als Systembenutzer und / oder die Systemadministration können so je nach Wunsch und eigenem Sicherheitsbedürfnis die Komplexität erhöhen, um eine höhere Sicherheitsstufe zu erhalten,
4. einzelne Sicherheitsstufen in einem Schritt zusammenfassen kann und somit eine parallele Abarbeitung einer Vielzahl an Sicherheitsstufen ermöglicht, um den Authentisierungsprozess zu beschleunigen,
5. die 1:1 Beziehung von Eingabecode und Authentisierungscode auflöst,
6. den Zugriff nicht legitimierter Angreifer durch Erspähen erschwert, da die Authentisierung offen / öffentlich erfolgen kann, ohne dass der individuelle Systembenutzer Angst haben muss, dass ein Dritter die erspähte getätigte Eingabe zielführend und ressourcenarm ausnutzen kann,
7. die physikalische Eingabe des Authentisierungscodes auf dem gesamten Eingabefeld verteilt, was eine Ableitung von Eingaben durch Druckspuren (z.B. Schmutzprofile, Fingerspuren etc. ) deutlich erschwert,
8. eine gegenseitige Authentisierungsüberprüfung (Mensch-Maschine) ermöglicht, um Phishing (siehe [008]) zu erschweren,
9. offen für zukünftige kryptografische Sicherheitstechniken, -verfahren und - erweiterungen ist, die flexibel eingebunden werden können,
10. vom individuellen Systembenutzer keine Fähigkeiten der Kryptografie, der Informatik oder der Mechanik erfordert,
11. sich einfach in bestehende Sicherheitssysteme implementieren lässt,
12. nicht zwingend die Erstellung neuer Authentisierungscodes erfordert, da bestehende Authentisierungscodes beibehalten werden können und
13. die Erinnerung an den Authentisierungscode stärkt, da sich der individuelle Systembenutzer während dem Authentisierungsprozess intensiv mit dem Authentisierungscode auseinandersetzt und dieser sich so tiefer ins Langzeitgedächtnis einprägt.

Nachfolgend wird das Verfahren beschrieben, mit welchem die vorgenannten Vorteile erreicht werden können. Es werden Bezugszeichen verwendet, die sich auf die in den angehängten Figuren verwendeten Ziffern beziehen sowie auf die angehängte Bezugszeichenliste.

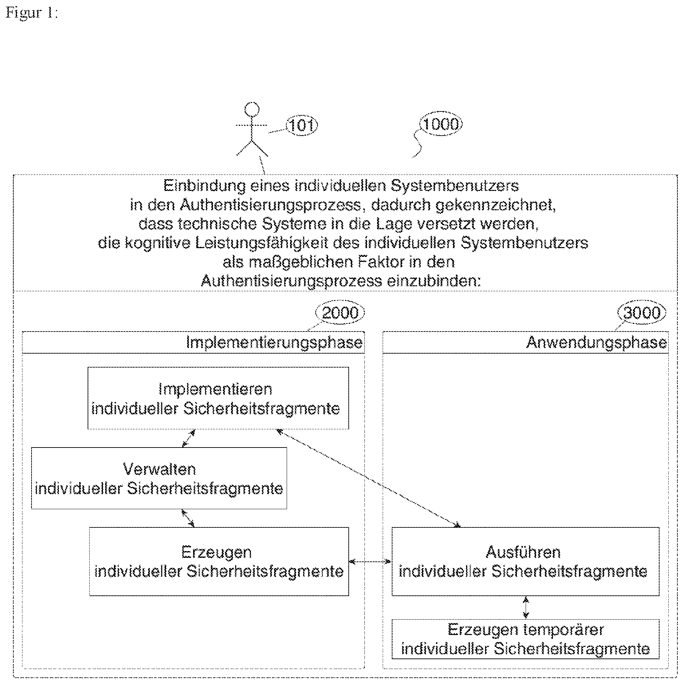

Das Verfahren wird fortan als individuelle algorithmusbasierte Multifaktor-Authentisierung (kurz: dopeIN oder auch dopeIN-Verfahren) 1000 bezeichnet (Fig. 1), das heißt, die Bezeichnung dopeIN ersetzt im Folgenden die Bezeichnung der individuellen algorithmusbasierten Multifaktor-Authentisierung und wird synonym verwendet.

Damit Individuen die Vorteile des dopeIN-Verfahrens 1000 nutzen können, bedarf es der Definition und Etablierung von Begrifflichkeiten zur Abgrenzung zu bekanntem Wissen. Die spezifischen Begriffsdefinitionen werden im Folgenden unmittelbar bei der Verwendung im Fließtext vermerkt und / oder mit dem Präfix dopeIN ergänzt.

Technische Systeme stellen im Kontext der individuellen algorithmusbasierten Multifaktor-Authentisierung (dopeIN) 1000 (Fig. 1) technische Komponenten (z.B. Computer, Mikroprozessoren, Maschinen, Geräte, Bauteile etc.) in einer größeren Einheit (z.B. Computernetzwerk, Anlage, Gebäude, Gerät, Maschine etc.) dar, die zum Zweck einer "Mensch-Maschinen-Authentisierung" bzgl. ihrer Ein- und Ausgangsgrößen zusammenwirken.

Sicherheitsfragmente dienen der Authentisierungsprüfung. Sie können als Ein- und Ausgabegrößen innerhalb einer einzigen technischen Komponente im technischen System erstellt und / oder geprüft als auch in einem Netzwerk unterschiedlicher technischer Komponenten in technischen Systemen verteilt, erstellt und / oder geprüft werden.

Das hier offenbarte dopeIN-Verfahren 1000 unterscheidet zwei grundsätzliche Phasen. Die Implementierungsphase 2000 und die Anwendungsphase 3000. Die Anwendungphase 3000 setzt eine Implementierungphase 2000 voraus.

Um ein zielführendes Verständnis zur Nutzung der individuellen algorithmusbasierten Multifaktor-Authentisierung (dopeIN) 1000 zu vermitteln wird die Anwendungphase 3000 vor der Implementierungphase 2000 erläutert und im Anhang schematisch in Ablaufdiagrammen der Figuren 1 bis 4 verdeutlicht.

Die technischen Authentisierungs- und Sicherheitssysteme 100, 200 können sich bei der Anwendungs- und Implementierungsphase 3000, 2000 unterscheiden, müssen dies aber nicht zwingend. Zum besseren Verständnis wird das technische System im Kontext der Anwendungsungsphase 3000 mit 100 und im Kontext der Implementierungsphase 2000 mit 200 gekennzeichnet.

Die technischen Sicherheitssysteme 200 dienen zur Verwaltung, Erzeugung und/oder zur Synchronisation / zum Datenaustausch von Algorithmen zur individuellen algorithmusbasierten Multifaktor-Authentisierung.

Die technische Authentisierungssysteme 100 führen Algorithmen zur individuellen algorithmusbasierten Multifaktor-Authentisierung aus, um sicherheitsrelevante Aktionen mittels zusätzlicher kognitiver Leistung des individuellen Systembenutzers 101 im Authentisierungsfall abzusichern.

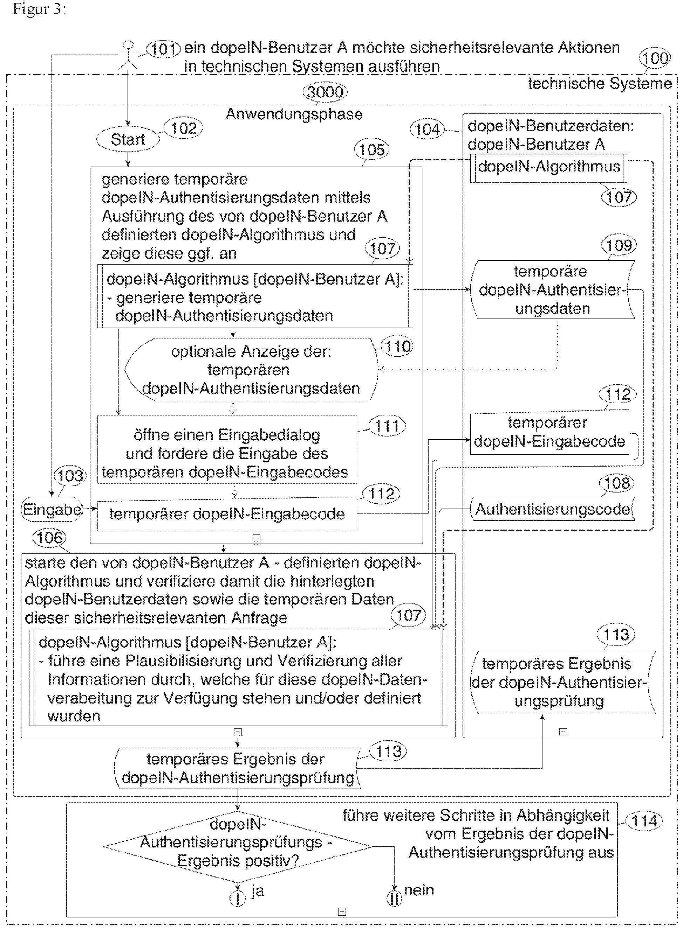

### Anwendungsphase 3000 (Fig. 3)

Ein technisches Authentisierungssystem 100, bei welchem ein Mensch sich als individueller Systembenutzer 101 legitimieren muss 102, nutzt bei Authentisierungsprozessen zur Datenverarbeitung 105, 106 einen zuvor in der Implementierungsphase 2000 definierten gemeinsamen geheimen Authentisierungscode 108 sowie einen zuvor definierten gemeinsamen geheimen dopeIN-Algorithmus 107.

Beim Systemzugriff auf eine sicherheitsrelevante Aktion 102 eines individuellen Systembenutzers 101, welcher das dopeIN-Verfahren 1000 nutzt (im Folgenden dopeIN-Benutzer 101 genannt), generiert das technischen Authentisierungssystem 100 zugehörig zum anfragenden dopeIN-Benutzer 101 temporäre Authentisierungsdaten 109 und stellt eine Eingabe-Aufforderung 111 an den dopeIN-Benutzer 101. Diese temporären Authentisierungsdaten 109 (im Folgenden dopeIN- Authentisierung oder auch dopeIN-Authentisierungsdaten 109 genannt) sind das Ergebnis der dopeIN-Datenverarbeitung 105, durch Ausführung des dopeIN-Algorithmus 107 des anfragenden dopeIN-Benutzers 101, zum Anfrage-Zeitpunkt 102.

Ist der dopeIN-Benutzer 101 in der Lage die temporären dopeIN- Authentisierungsdaten 109, 110 korrekt zu interpretieren, so kann er durch seine kognitive Leistung den korrekten Eingabecode 112 zum Anfrage-Zeitpunkt 102 ermitteln.

Erscheint dem dopeIN-Benutzer 101 die Eingabe-Aufforderung 111 des technischen Authentisierungssystems 100 legitim, löst der individuelle Systembenutzer 101 die gestellte Aufforderung 111 und übermittelt das Ergebnis seiner kognitiven Leistung an das anfragende technische Authentisierungssystem 100 mittels Eingabe 103. Diese Eingabedaten 112 des dopeIN-Benutzers 101 werden im Folgenden temporärer dopeIN-Eingabecode 112 genannt.

Das technische Authentisierungssystem 100 überprüft die einzelnen Sicherheitsfragmente, den temporären dopeIN-Eingabecode 112 des dopeIN-Benutzers 101 auf Basis der generierten temporären dopeIN- Authentisierungsdaten 109, dem gemeinsam vereinbarten geheimen Authentisierungscode 108 sowie dem individuell zugrundeliegenden dopeIN-Algorithmus 107 des dopeIN Verfahrens 1000, mittels Ausführung des dopeIN-Algorithmus 107 und liefert als Ausgabe ein temporäres Ergebnis 113 dieser dopeIN-Authentisierungsprüfung 106.

Das temporäre Ergebnis 113 der Authentisierungsüberprüfung 106 kann nun genutzt werden, um in Abhängigkeit vom Ergebnis 113 die weiteren Schritte des Systemablaufs 114 zu bestimmen. Als Beispiel könnte bei einem positives temporären Ergebnis 113 unmittelbar die gewünschte sicherheitsrelevante Aktion 102 ausgeführt werden. Im negativen Fall könnte der dopeIN-Benutzer 101 eine Warnmeldung erhalten und anschließend ein weiterer Systemzugriff des dopeIN-Benutzers 101 blockiert werden.

Die nachfolgend aufgeführte Tabelle fasst die einzelnen Schritt der Anwendungsphase 3000 wie in Fig. 3 dargestellt nochmals zusammen.

dopeIN-Anwendungsphase: Mensch ⇔ Maschine

| Mensch: | | |
|---|---|---|
| ⇓ | * führt eine sicherheitsrelevante Aktion 102 an einem technischen Authentisierungssystem 100 aus, welches das dopeIN-Verfahren 1000 implementiert hat | |

| Maschine: | | |
|---|---|---|
| ⇓ | * führt den jeweiligen dopeIN-Algorithmus 107 des jeweiligen dopeIN-Benutzers 101 aus 105 | |
| | * generiert die temporären Authentisierungsdaten 109 | |
| | * zeigt 110 optional diese temporären Authentisierungsdaten 109 an | |
| | * verwahrt 104 diese temporären Authentisierungsdaten 109 zur weiteren dopeIN-Datenverarbeitung | |
| | * öffnet einen Eingabedialog und fordert zur Eingabe des temporären dopeIN-Eingabecodes 112 auf 111 | |

| Mensch: | | |
|---|---|---|
| ⇓ | * ermittelt kognitiv, auf Basis des zuvor definierten dopeIN-Algorithmus 107, das Sicherheitsfragment, welches die Maschine zur nachfolgenden dopeIN-Datenverarbeitung 106 benötigt, um eine korrekte Authentisierung (siehe [001]) zu bestätigen und als Ausgabe 113 zu melden | |
| | * fügt der dopeIN-Datenverarbeitung 106 ein weiteres Sicherheitsfragment (temporärer dopeIN-Eingabecode 112) mittels Eingabe 103 hinzu | |

| Maschine: | | |
|---|---|---|
| ⇓ | * führt den jeweiligen dopeIN-Algorithmus 107 des jeweiligen dopeIN-Benutzers 101 aus, um alle Fragmente der sicherheitsrelevanten Systemanfrage 102 zu plausibilisieren und zu verifizieren 106 | |
| | ⇓ | * prüft dazu alle einzelnen Sicherheitsfragmente auf Plausibilität (107, 108, 109, 112) |
| | ⇓ | * prüft dazu, ob alle Sicherheitsfragmente zueinander passen 106 |
| | ⇓ | * verifiziert alle Sicherheitsfragmente inhaltlich, in Abhängigkeit von ihrer Definition 106 |
| | ⇓ | * erzeugt auf Basis der dopeIN-Datenverarbeitung 106 das temporäre Ergebnis der dopeIN-Authentisierungsprüfung als Ausgabe 113 |
| | * führt in Abhängigkeit vom temporären Ergebnis 113 der dopeIN-Authentisierungsprüfung 106 weitere Schritte aus 114 | |

Nachfolgend potenzielle Einsatzgebiete für die technische Umsetzung der dopeIN-Anwendungsphase: Mensch ⇔ Maschine:
Potenzielle Einsatzgebiete für die dopeIN-Anwendungsphase: Mensch ⇔ Maschine

### Beispiel 1: Authentisierung an einem Überweisungsautomaten Bankkunde

| Mensch: | | |
|---|---|---|
| ⇓ | * führt eine sicherheitsrelevante Aktion 102 an einem technischen Authentisierungssystem 100 aus, welches das dopeIN-Verfahren 1000 implementiert hat | |
| | → | Ein Bankkunde möchte mit seiner EC-Karte eine Überweisung an einem Überweisungsautomaten seiner Bank tätigen. Dazu führt dieser seine EC-Karte in den Überweisungsautomaten ein. |

| Maschine: | | |
|---|---|---|
| ⇓ | * führt den jeweiligen dopeIN-Algorithmus 107 des jeweiligen dopeIN-Benutzers 101 aus 105 | |
| | → | Unter Nutzung des Lesegerätes des Überweisungsautomaten wird festgestellt, dass es sich um eine legitimierte EC-Karte des Bankkunden handelt und es findet ein gesicherter Datenaustausch mit dem Sicherheits-Server der Bank statt. Der Sicherheits-Server der Bank führt den zugehörigen dopeIN-Algorithmus 107 des anfragenden Bankkunden (dopeIN-Benutzer) 101 aus 105. |
| | * generiert die temporären Authentisierungsdaten 109 | |
| | * verwahrt 104 diese temporären Authentisierungsdaten 109 zur weiteren dopeIN-Datenverarbeitung | |
| | → | Durch die Ausführung des zugehörigen dopeIN-Algorithmus 107 werden auf dem Sicherheits-Server die temporären Authentisierungsdaten 109 generiert und verwahrt. |
| | * zeigt 110 optional diese temporären Authentisierungsdaten 109 an | |
| | * öffnet einen Eingabedialog und fordert zur Eingabe des temporären dopeIN-Eingabecodes 112 auf 111 | |
| | → | Der Sicherheits-Server der Bank sendet anschließend ein gesichertes Datenpaket an den Überweisungsautomaten, welches die temporären Authentisierungsdaten 109 beinhaltet. Auf dem Überweisungsautomaten werden anschließend diese temporären Authentisierungsdaten 109 dargestellt. Gleichzeitig wird der Bankkunde um die Eingabe des temporären dopeIN-Eingabecodes 112 gebeten. |

| Mensch: | | |
|---|---|---|
| ⇓ | * ermittelt kognitiv, auf Basis des zuvor definierten dopeIN-Algorithmus 107, das Sicherheitsfragment, welches die Maschine zur nachfolgenden dopeIN-Datenverarbeitung 106 | |
| | benötigt, um eine korrekte Authentisierung (siehe [001]) zu bestätigen und als Ausgabe 113 zu melden | |
| | → | Der Bankkunde prüft die vom Überweisungsautomaten angezeigten temporären Authentisierungsdaten 109 auf Plausibilität, um anschließend mittels kognitiver Leistung den temporären dopeIN-Eingabecode 112 zu ermitteln. |
| | * fügt der dopeIN-Datenverarbeitung 106 ein weiteres Sicherheitsfragment (temporärer dopeIN-Eingabecode 112) mittels Eingabe 103 hinzu | |
| | → | Der Bankkunde gibt den temporär ermittelten dopeIN-Eingabecode 112 am Überweisungsautomaten ein und bestätigt seine Eingabe. |

| Maschine: | | |
|---|---|---|
| ⇓ | * führt den jeweiligen dopeIN-Algorithmus 107 des jeweiligen dopeIN-Benutzers 101 aus, um alle Fragmente der sicherheitsrelevanten Systemanfrage 102 zu plausibilisieren und zu verifizieren 106 | |
| | → | Durch die Bestätigung der Eingabe des temporären dopeIN-Eingabecodes 112 am Überweisungsautomaten werden alle zur Verfügung stehenden Sicherheitsfragmente dieser sicherheitsrelevanten Aktion mittels einer gesicherten Datenübertragung vom Überweisungsautomaten an den Sicherheits-Server der Bank gesendet. Dieser führt im Anschluss den zugehörigen dopeIN-Algorithmus 107 des anfragenden Bankkunden (dopeIN-Benutzer) 101 aus 106. |
| | ⇓ | * prüft dazu alle einzelnen Sicherheitsfragmente auf Plausibilität (107, 108, 109, 112) |
| | ⇓ | * prüft dazu, ob alle Sicherheitsfragmente zueinander passen 106 |
| | ⇓ | * verifiziert alle Sicherheitsfragmente inhaltlich, in Abhängigkeit von ihrer Definition 106 |
| | | * erzeugt auf Basis der dopeIN-Datenverarbeitung 106 das temporäre Ergebnis der dopeIN-Authentisierungsprüfung als Ausgabe 113 |
| | * führt in Abhängigkeit vom temporären Ergebnis 113 der dopeIN-Authentisierungsprüfung 106 weitere Schritte aus 114 | |
| | → | Abhängig vom Überprüfungsergebnis der sicherheitsrelevanten Anfrage zur Authentisierung an einem Überweisungsautomaten können nun weitere zuvor definierte Schritte erfolgen. Bei positivem Ergebnis, kann z.B. der Zugang zu allen Bankkunden-Funktionen des Überweisungsautomaten zur Verfügung stehen. Im negativen Fall kann z.B. eine erneute Authentisierung vom Bankkunden gefordert werden. |

### Beispiel 2: Kaufbestätigung eines bereits authentisierten Web-Shop-Benutzers als individuellen Systembenutzer 101

| Mensch: | | |
|---|---|---|
| ⇓ | * führt eine sicherheitsrelevante Aktion 102 an einem technischen Authentisierungssystem 100 aus, welches das dopeIN-Verfahren 1000 implementiert hat | |
| | → | Ein bereits authentisierter Web-Shop-Benutzer möchte seinen gefüllten Online-Warenkorb zahlungspflichtig bestellen. Dazu bestätigt der Web-Shop-Benutzer eine entsprechende Eingabeaufforderung des Web-Shops in seinem Browser. |

| Maschine: | | |
|---|---|---|
| ⇓ | * führt den jeweiligen dopeIN-Algorithmus 107 des jeweiligen dopeIN-Benutzers 101 aus 105 | |
| | → | In den Benutzerdaten des Web-Shop-Benutzer wurde definiert, dass zahlungspflichtige Vorgänge zusätzlich mit einer individuellen Algorithmus basierten Multifaktor-Authentisierung (dopeIN) 1000 abgesichert werden, weshalb der zugehörige dopeIN-Algorithmus 107 des Web-Shop-Benutzers (dopeIN-Benutzer) 101 auf dem Sicherheits-Server des Web-Shop-Anbieters ausgeführt wird 105. |
| | * generiert die temporären Authentisierungsdaten 109 | |
| | * verwahrt 104 diese temporären Authentisierungsdaten 109 zur weiteren dopeIN-Datenverarbeitung | |
| | → | Durch die Ausführung des zugehörigen dopeIN-Algorithmus 107 werden auf dem Sicherheits-Server des Web-Shop-Anbieters die temporären Authentisierungsdaten 109 generiert und verwahrt. |
| | * zeigt 110 optional diese temporären Authentisierungsdaten 109 an | |
| | * öffnet einen Eingabedialog und fordert zur Eingabe des temporären dopeIN-Eingabecodes 112 auf 111 | |
| | → | Der Sicherheits-Server des Web-Shop-Anbieters sendet anschließend mittels einer gesicherten Datenübertragung ein gesichertes Datenpaket an den Web-Server des Web-Shop-Anbieters, welches die temporären Authentisierungsdaten 109 beinhaltet. Im Browser des Web-Shop-Benutzers werden dadurch im Anschluss diese temporären Authentisierungsdaten 109 dargestellt. Gleichzeitig wird der Web-Shop-Benutzer um die Eingabe des temporären dopeIN-Eingabecodes 112 gebeten. |

| Mensch: | | |
|---|---|---|
| ⇓ | * ermittelt kognitiv, auf Basis des zuvor definierten dopeIN-Algorithmus 107, das Sicherheitsfragment, welches die Maschine zur nachfolgenden dopeIN-Datenverarbeitung 106 benötigt, um eine korrekte Authentisierung (siehe [001]) zu bestätigen und als Ausgabe 113 zu melden | |
| | → | Der Web-Shop-Benutzer prüft die vom Web-Shop angezeigten temporären dopeIN-Authentisierungsdaten 109 auf Plausibilität, um anschließend mittels kognitiver Leistung den temporären dopeIN-Eingabecode 112 zu ermitteln. |
| | * fügt der dopeIN-Datenverarbeitung 106 ein weiteres Sicherheitsfragment (temporärer dopeIN-Eingabecode 112) mittels Eingabe 103 hinzu | |
| | → | Der Web-Shop-Benutzer gibt den temporär ermittelten dopeIN-Eingabecode 112 in seinen Browser ein und bestätigt seine Eingabe. |

| Maschine: | | |
|---|---|---|
| ⇓ | * führt den jeweiligen dopeIN-Algorithmus 107 des jeweiligen dopeIN-Benutzers 101 aus, um alle Fragmente der sicherheitsrelevanten Systemanfrage 102 zu plausibilisieren und zu verifizieren 106 | |
| | → | Durch die Bestätigung der Eingabe des temporären dopeIN-Eingabecodes 112 im Browser des Web-Shop-Benutzers werden alle zur Verfügung stehenden Sicherheitsfragmente dieser sicherheitsrelevanten Aktion mittels einer gesicherten Datenübertragung vom Browser des Web-Shop-Benutzers an den Web-Server des Web-Shop-Anbieters und von dort an den Sicherheits-Server des Web-Shop-Anbieters gesendet. Dieser führt im Anschluss den zugehörigen dopeIN-Algorithmus 107 des anfragenden Web-Shop-Benutzers (dopeIN-Benutzer) 101 aus 106. |
| | ⇓ | * prüft dazu alle einzelnen Sicherheitsfragmente auf Plausibilität (107, 108, 109, 112) |
| | ⇓ | * prüft dazu, ob alle Sicherheitsfragmente zueinander passen 106 |
| | ⇓ | * verifiziert alle Sicherheitsfragmente inhaltlich, in Abhängigkeit von ihrer Definition 106 |
| | ⇓ | * erzeugt auf Basis der dopeIN-Datenverarbeitung 106 das temporäre Ergebnis der dopeIN-Authentisierungsprüfung als Ausgabe 113 |
| | * führt in Abhängigkeit vom temporären Ergebnis 113 der dopeIN-Authentisierungsprüfung 106 weitere Schritte aus 114 | |
| | → | Abhängig vom Überprüfungsergebnis dieser sicherheitsrelevanten Anfrage des Web-Shop-Benutzers können nun weitere zuvor definierte Schritte erfolgen. Bei positivem Ergebnis kann z.B. die Kaufbestätigung der Artikel im Warenkorb erfolgen. Im negativen Fall kann z.B. eine Sperrung des Web-Shop-Kunden für die nächsten 15 Minuten mit entsprechender Email-Benachrichtigung an die Email-Adresse des Web-Shop-Benutzer erfolgen. |

### Beispiel 3: Zugangskontrolle zu einem Sicherheitslabor

| Mensch: | | |
|---|---|---|
| ⇓ | * führt eine sicherheitsrelevante Aktion 102 an einem technischen Authentisierungssystem 100 aus, welches das dopeIN-Verfahren 1000 implementiert hat | |
| | → | Ein Mitarbeiter einer Firma möchte ein Sicherheitslabor auf dem Firmengelände betreten. Dazu hält dieser seinen Firmenausweis in Form einer Chip-Karte an das entsprechende Lesegerät des gesicherten Labor-Eingangs. |

| Maschine: | | |
|---|---|---|
| ⇓ | * führt den jeweiligen dopeIN-Algorithmus 107 des jeweiligen dopeIN-Benutzers 101 aus 105 | |
| | → | Die korrekte Identifikation der Chip-Karte am Lesegerät sendet anschließend mittels einer gesicherten Datenübertragung ein gesichertes Datenpaket an den in der Firma eingesetzten Sicherheits-Server. Dieser führt den zugehörigen dopeIN-Algorithmus 107 des anfragenden Mitarbeiters (dopeIN-Benutzer) 101 aus 105. |
| | * generiert die temporären Authentisierungsdaten 109 | |
| | * verwahrt 104 diese temporären Authentisierungsdaten 109 zur weiteren dopeIN-Datenverarbeitung | |
| | → | Durch die Ausführung des zugehörigen dopeIN-Algorithmus 107 werden auf dem Sicherheits-Server die temporären Authentisierungsdaten 109 generiert und verwahrt. |
| | * zeigt 110 optional diese temporären Authentisierungsdaten 109 an | |
| | * öffnet einen Eingabedialog und fordert zur Eingabe des temporären dopeIN-Eingabecodes 112 auf 111 | |
| | → | Mit Hilfe einer Textnachricht auf das Firmenhandy des Mitarbeiters erhält dieser die temporären Authentisierungsdaten 109 und den Hinweis, dass er am Tastenfeld neben der Sicherheitstür des Labors seinen temporär ermittelten dopeIN-Eingabecode 112 eingeben soll. Ebenso erhält der Mitarbeiter den Hinweis diese Eingabe mit dem am Tastenfeld angebrachten Fingerscanner zu bestätigen 111. |

| Mensch: | | |
|---|---|---|
| ⇓ | * ermittelt kognitiv, auf Basis des zuvor definierten dopeIN-Algorithmus 107, das Sicherheitsfragment, welches die Maschine zur nachfolgenden dopeIN-Datenverarbeitung | |
| | 106 benötigt, um eine korrekte Authentisierung (siehe [001]) zu bestätigen und als Ausgabe 113 zu melden | |
| | → | Der Mitarbeiter liest und prüft die Zustellung und den Inhalt der Textnachricht auf seinem Firmenhandy auf Plausibilität, um anschließend mittels kognitiver Leistung den temporären dopeIN-Eingabecodes 112 zu ermitteln. |
| | * fügt der dopeIN-Datenverarbeitung 106 ein weiteres Sicherheitsfragment (temporärer dopeIN-Eingabecode 112) mittels Eingabe 103 hinzu | |
| | → | Der Mitarbeiter folgt den Anweisungen der zuvor benannten Textnachricht, gibt den temporär ermittelten dopeIN-Eingabecode 112 am Tastenfeld der benannten Sicherheitstür ein und bestätigt seine Eingabe mittels Fingerabdruck seines linken Ringfingers am zugehörigen Fingerabdruckscanner. |

| Maschine: | | |
|---|---|---|
| ⇓ | * führt den jeweiligen dopeIN-Algorithmus 107 des jeweiligen dopeIN-Benutzers 101 aus, um alle Fragmente der sicherheitsrelevanten Systemanfrage 102 zu plausibilisieren und zu verifizieren 106 | |
| | → | Durch die korrekte Identifikation des Fingerabdrucks des Mitarbeiters am Fingerabdruckscanners wird der am Tastenfeld eingegebene temporäre dopeIN-Eingabecode 112 an den in der Firma eingesetzten Sicherheits-Server gesendet, dieser führt im Anschluss den zugehörigen dopeIN-Algorithmus 107 des anfragenden Mitarbeiters (dopeIN-Benutzer) 101 aus 106. |
| | ⇓ | * prüft dazu alle einzelnen Sicherheitsfragmente auf Plausibilität (107, 108, 109, 112) |
| | ⇓ | * prüft dazu, ob alle Sicherheitsfragmente zueinander passen 106 |
| | ⇓ | * verifiziert alle Sicherheitsfragmente inhaltlich, in Abhängigkeit von ihrer Definition 106 |
| | ⇓ | * erzeugt auf Basis der dopeIN-Datenverarbeitung 106 das temporäre Ergebnis der dopeIN-Authentisierungsprüfung als Ausgabe 113 |
| | * führt in Abhängigkeit vom temporären Ergebnis 113 der dopeIN-Authentisierungsprüfung 106 weitere Schritte aus 114 | |
| | → | Abhängig von Überprüfungsergebnis der sicherheitsrelevanten Anfrage zum Öffnen der Sicherheitstür zum Sicherheits-Labor können nun weitere zuvor definierte Schritte erfolgen. Bei positivem Ergebnis kann z.B. die Sicherheitstür geöffnet werden oder im negativen Fall ein Alarm ertönen und die Sicherheitstür verschlossen bleiben. |

### Beispiel 4: Deaktivierung der Wegfahrsperre eines PKW

| Mensch: | | |
|---|---|---|
| ⇓ | * führt eine sicherheitsrelevante Aktion 102 an einem technischen Authentisierungssystem 100 aus, welches das dopeIN-Verfahren 1000 implementiert hat | |
| | → | Ein PKW-Fahrer möchte an seinem PKW die Wegfahrsperre deaktivieren, um den Motor des PKW zu starten. Dazu betätigt dieser den Startknopf in seinem PKW. |

| Maschine: | | |
|---|---|---|
| ⇓ | * führt den jeweiligen dopeIN-Algorithmus 107 des jeweiligen dopeIN-Benutzers 101 aus 105 | |
| | → | Unter Nutzung des im Bordcomputer hinterlegten benutzerdefinierten Autoschlüssels und des gedrückten Startknopfes am PKW, erkennt der Bordcomputer, dass es sich um einen legitimierten Autoschlüssel des PKW-Fahrers handelt und führt den zugehörigen dopeIN-Algorithmus 107 des anfragenden PKW-Fahrers (dopeIN-Benutzer) 101 aus 105. |
| | * generiert die temporären Authentisierungsdaten 109 | |
| | * verwahrt 104 diese temporären Authentisierungsdaten 109 zur weiteren dopeIN-Datenverarbeitung | |
| | → | Durch die Ausführung des zugehörigen dopeIN-Algorithmus 107 werden im Bordcomputer des PKW die temporären Authentisierungsdaten 109 generiert und verwahrt. |
| | * zeigt 110 optional diese temporären Authentisierungsdaten 109 an | |
| | * öffnet einen Eingabedialog und fordert zur Eingabe des temporären dopeIN-Eingabecodes 112 auf 111 | |
| | → | Im Borddisplay des PKW werden anschließend diese temporären Authentisierungsdaten 109 dargestellt. Gleichzeitig wird der PKW-Fahrer um die Eingabe des temporären dopeIN-Eingabecodes 112 gebeten. |

| Mensch: | | |
|---|---|---|
| ⇓ | * ermittelt kognitiv, auf Basis des zuvor definierten dopeIN-Algorithmus 107, das Sicherheitsfragment, welches die Maschine zur nachfolgenden dopeIN-Datenverarbeitung 106 benötigt, um eine korrekte Authentisierung (siehe [001]) zu bestätigen und als Ausgabe 113 zu melden | |
| | → | Der PKW-Fahrer prüft die im Borddisplay angezeigten temporären Authentisierungsdaten 109, um anschließend mittels kognitiver Leistung den temporären dopeIN-Eingabecode 112 zu ermitteln. |
| | * fügt der dopeIN-Datenverarbeitung 106 ein weiteres Sicherheitsfragment (temporärer dopeIN-Eingabecode 112) mittels Eingabe 103 hinzu | |
| | → | Der PKW-Fahrer gibt den temporär ermittelten dopeIN-Eingabecode 112 am Borddisplay des PKW ein und bestätigt seine Eingabe. |

| Maschine: | | |
|---|---|---|
| ⇓ | * führt den jeweiligen dopeIN-Algorithmus 107 des jeweiligen dopeIN-Benutzers 101 aus, um alle Fragmente der sicherheitsrelevanten Systemanfrage 102 zu plausibilisieren und zu verifizieren 106 | |
| | → | Durch die Bestätigung der Eingabe des temporären dopeIN-Eingabecodes 112 im Borddisplay führt der Bordcomputer im Anschluss den zum PKW-Schlüssel zugehörigen dopeIN-Algorithmus 107 des PKW-Fahrers (dopeIN-Benutzer) 101 aus 106. |
| | ⇓ | * prüft dazu alle einzelnen Sicherheitsfragmente auf Plausibilität (107, 108, 109, 112) |
| | ⇓ | * prüft dazu, ob alle Sicherheitsfragmente zueinander passen 106 |
| | ⇓ | * verifiziert alle Sicherheitsfragmente inhaltlich, in Abhängigkeit von ihrer Definition 106 |
| | ⇓ | * erzeugt auf Basis der dopeIN-Datenverarbeitung 106 das temporäre Ergebnis der dopeIN-Authentisierungsprüfung als Ausgabe 113 |
| | * führt in Abhängigkeit vom temporären Ergebnis 113 der dopeIN-Authentisierungsprüfung 106 weitere Schritte aus 114 | |
| | → | Abhängig von Überprüfungsergebnis der sicherheitsrelevanten Anfrage zur Deaktivierung der Wegfahrsperre können nun weitere zuvor definierte Schritte erfolgen. Bei positivem Ergebnis, kann z.B. die Wegfahrsperre deaktiviert werden, um im nächsten Schritt den Motor zu starten. Im negativen Fall kann z.B. eine Fehlermeldung im Borddisplay angezeigt werden, dass keine korrekte Authentisierung stattgefunden hat. |

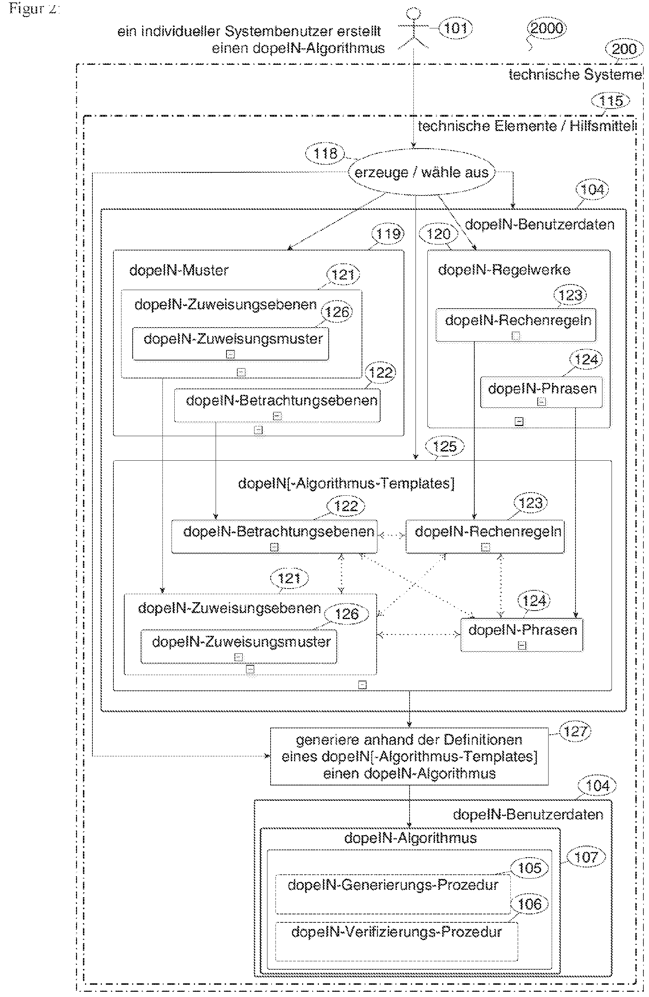

Implementierungsphase 2000, wie in Figur 2 dargestellt

Zur Nutzung einer individuellen algorithmusbasierten Multifaktor-Authentisierung (dopeIN) 1000 zwischen einem individuellen Systembenutzer 101 und einem technischen Authentisierungssystem 100 müssen zuvor technische Elemente / Hilfsmittel 115 erstellt und verwaltet werden. Dies geschieht innerhalb der Implementierungsphase 2000.

Ein individueller Systembenutzer 101 erstellt unter Verwendung seiner kognitiven Fähigkeiten, einem technischen Sicherheitssystem 200 und technischer Elemente / Hilfsmittel 115 einen individuellen soft- / oder hardwarebasierten dopeIN-Algorithmus 107. Dafür benötigt der individuelle Systembenutzer 101 kein Hintergrundwissen in Kryptografie, Informatik oder Mechanik.

Der dopeIN-Algorithmus 107 ist das technische Produkt bzw. Konstrukt, welches Datenverarbeitungsprozesse 105, 106 mit dem Ziel einer sicheren "individuellen Mensch-Maschinen-Authentisierung" definiert. Der dopeIN-Algorithmus 107 ist ein eigenes Sicherheitsfragment bei der individuellen algorithmusbasierten Multifaktor-Authentisierung (dopeIN) 1000.

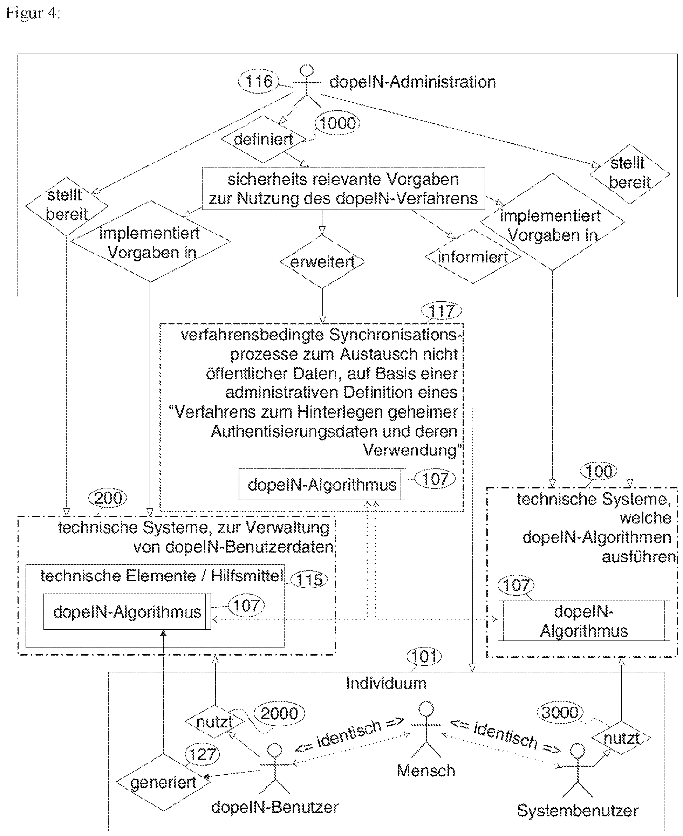

Unter dopeIN-Administration 116 wird eine Administrationseinheit (Mensch und/oder Organisation) verstanden, welche das dopeIN-Verfahren 1000 in ihren Sicherheitsprozess implementiert und die personellen sowie technischen Voraussetzungen 2000, 3000 dazu organisiert. Verfahrensbedingte Synchronisationsprozesse zum Austausch nicht öffentlicher Daten, wie z.B. ein systemeigenes "Verfahren zum Hinterlegen geheimer Authentisierungsdaten und deren Verwendung" 117, werden dazu um das dopeIN-Verfahren 1000 erweitert (vgl. Fig. 4).

Es ist von der dopeIN-Administration 116 abzuwägen, wann und in welcher Komplexität dopeIN-Algorithmen 107 zum Einsatz kommen und wer diese definiert und verwaltet. Die Vor- und Nachteile individueller Gestaltungsfreiheit sind hierbei gegen systematisierte Restriktionen und Vorschriften abzuwägen (vgl. Fig. 4).

Ebenso definiert die dopeIN-Administration 116 Hardware- und / oder Software-Komponenten technischer Authentisierungssysteme 100 und technischer Sicherheitssysteme 200 und ordnet zu, wie und wo:
- die technischen Elemente / Hilfsmittel 115 zur Erstellung und Verwaltung von dopeIN-Algorithmen 107 zur Verfügung gestellt werden,
- dopeIN-Benutzerdaten 104 verwaltet werden,
- dopeIN-Algorithmen 107 generiert werden 127,
- dopeIN-Algorithmen 107 ausgeführt werden 105, 106,
- die temporären Authentisierungsdaten 109 verwaltet werden,
- die jeweiligen optionalen dopeIN-Anzeigen 110 dargestellt werden,
- die jeweiligen Eingaben der dopeIN-Eingabecodes 103 getätigt werden und
- wie die jeweiligen Ausgaben der dopeIN-Datenverarbeitungen 105, 106, 127 zu interpretieren und zu verwalten sind.

Die Vor- und Nachteile interner oder externer Datenverarbeitungsprozesse und Dienstleistungen sind hierbei gegeneinander abzuwägen (vgl. Fig.2, Fig. 3, Fig. 4).

Die dopeIN-Administration 116 entscheidet gleichfalls darüber, wann und wie weitere Techniken, Verfahren und Standards (vgl. [009], [014]) im Kontext der Implementierung der individuellen algorithmusbasierten Multifaktor-Authentisierung (dopeIN) zu integrieren sind.

Auf Basis eines dopeIN-Algorithmus 107 werden temporäre Authentisierungsdaten 109 generiert (siehe dopeIN-Generierungs-Prozedur) 105 und im späteren Prüfprozess analysiert und verifiziert (siehe dopeIN-Verifizierungs-Prozedur) 106. Der dopeIN-Algorithmus 107 erfüllt dazu mindestens folgende Sicherheitsaspekte:
- Er integriert mindestens einen gemeinsamen vereinbarten geheimen Authentisierungscode 108, welcher beiden Parteien, also dem individuellen Systembenutzer 101 und dem technischen Authentisierungssystem 100, bekannt ist.
- Er ist selbst ein Sicherheitsfragment -der Authentisierungsprüfungen.
- Er beinhaltet eine benutzerdefinierte dopeIN-Generierungs-Prozedur 105. Diese erzeugt bei der Ausführung ein temporäres Sicherheitsfragment (dopeIN-Authentisierungsdaten ) 109.
- Er beinhaltet eine benutzerdefinierte dopeIN-Verifizierungs-Prozedur 106. Diese führt logische Überprüfungen unterschiedlicher Eingabeparameter (temporäre Authentisierungsdaten 109, temporärer dopeIN-Eingabecode 112 und geheimer Authentisierungscode 108) in Abhängigkeit zueinander durch und liefert ein temporäres Ergebnis dieser Überprüfungen als Ausgabe 113.

Die nachfolgend aufgeführte Tabelle fasst die einzelnen Schritte der Implementierungsphase 2000 zusammen.

dopeIN-Implementierungsphase: Mensch ⇔ Maschine

| Mensch (dopeIN-Administration 116) |
|---|
| * implementiert das dopeIN-Verfahren 1000 in den Sicherheitsprozess und informiert die individuellen Systembenutzer 101 über Inhalt und Anwendung der individuellen algorithmusbasierten Multifaktor-Authentisierung (dopeIN) 1000 (Fig.1, vgl. Fig. 4) |
| * stellt die technischen Voraussetzungen zur Definition und Interpretation von dopeIN-Algorithmen 107 zur Verfügung oder gibt diese vor (vgl. Fig. 4) |

| Mensch (dopeIN-Benutzer 101) |
|---|
| * erzeugt, wählt aus 118, generiert 127 oder erhält 118 einen dopeIN-Algorithmus 107, welcher |
| * selbst ein Sicherheitsfragment der dopeIN-Datenverarbeitungen 105, 106, 127 darstellt |
| * eine benutzerdefinierte dopeIN-Generierungs-Prozedur 105 beinhaltet, welche bei Ausführung ein temporäres Sicherheitsfragment (dopeIN- Authentisierungsdaten) 109 für die anstehende dopeIN-Datenverarbeitung 106 erzeugt |
| * eine benutzerdefinierte dopeIN-Verifizierungs-Prozedur 106 beinhaltet, die bei Ausführung logische Verifizierungen unterschiedlicher Eingabeparameter (Sicherheitsfragmente) in Abhängigkeit zueinander durchführt und als temporäre Ausgabe das Ergebnis 113 dieser Verifizierungen 106 liefert (vgl. Fig. 3) |

| Maschine: |
|---|
| * stellt die technische Hard- und Software 100, 200, 115 dar, um Sicherheitsfragmente der individuellen algorithmusbasierten Multifaktor-Authentisierung (dopeIN) 1000 zu erzeugen, zu verwalten (erstellen, bearbeiten, ändern, speichern und löschen) und auszuführen. (vgl. Fig.4) |

Um einen individuellen Systembenutzer 101 ohne Kenntnisse der Kryptografie, Informatik oder Mechanik in die Lage zu versetzen individuelle Sicherheitsfragmente der individuellen algorithmusbasierten Multifaktor-Authentisierung (dopeIN) zu erzeugen und zu verwalten, bedarf es weiterer technischer Elemente / Hilfsmittel 115. (vgl. Fig. 2)

Zu diesen technischen Elementen / Hilfsmitteln 115 zählen:
- dopeIN-Regelwerke 120,
   ∘ dopeIN-Rechenregeln 123,
   ∘ dopeIN-Phrasen 124,
- dopeIN-Muster 119,
   ∘ dopeIN-Betrachtungsebenen 122,
   ∘ dopeIN-Zuweisungsebenen 121,
   ∘ dopeIN-Zuweisungsmuster 126 und
- dopeIN[-Algorithmus-Templates] 125.

Zum Generieren 127 von dopeIN-Algorithmen 107 können Vorlagen, so genannte dopeIN[-Algorithmus-Templates] 125, genutzt oder individuell erzeugt 118 werden. Diese dopeIN[-Algorithmus-Templates] 125 beinhalten das Gerüst eines dopeIN-Algorithmus 107, nicht aber geheime Informationen wie z.B. Authentisierungscodes 108.

Mit Hilfe von dopeIN-Regelwerken 120 werden anzuwendende dopeIN-Phrasen 124 und dopeIN-Rechenregeln 123 erzeugt. Damit lassen sich sowohl einfache, aber auch sehr komplexe Rechen- / bzw. Datenverarbeitungsvorgänge 105, 106, 107 abbilden.
Die Komplexität wählt der dopeIN-Benutzer 101 entsprechend seiner individuellen Sicherheitsbedürfnisse und seiner eigenen kognitiven Fähigkeiten aus.

Die Erzeugung und Verwendung von dopeIN-Regelwerken 120, dopeIN-Rechenregeln 123 und dopeIN-Phrasen 124 obliegt dem dopeIN-Benutzer 101 und richtet sich ggf. nach den Vorgaben der dopeIN-Administration 116 aus, welche das dopeIN-Verfahren 1000 nutzt bzw. implementiert (vgl. Fig. 4).

dopeIN-Rechenregeln 123 steuern auf einfachste Weise wie Rechenoperationen vom technischen Authentisierungssystem 100 mittels Ausführung des dopeIN-Algorithmus 107 zu erbringen sind. Sie legen ferner fest, wie der individuelle Systembenutzer 101 zu verfahren hat.

Nachfolgend werden Beispiele für unterschiedliche dopeIN-Rechenregeln 123 skizziert, wobei auf Bezugsziffern bewusst verzichtet wurde. Sie reichen von *sehr einfach* (Stufe 1a) bis *zu schwer* (Stufe 2c). Die Operatoren der Rechenaufgaben bestehen aus einstelligen Dezimalzahlen (0-9).

dopeIN-Rechenregeln der Stufe 1a:
1. Es wird unabhängig vom Operator oder Operand immer von links nach rechts gerechnet und je zwei Operanden und einem Operator ein Ergebnis ermittelt.
2. Kommt es bei einem Ergebnis zu einer zweistelligen Dezimalzahl, wird ausschließlich die Einerstelle zur Lösung verwendet.
3. Es gibt nur zwei Operanden und einen Operator.
4. Als Operatoren sind ausschließlich die Addition (+) oder Subtraktion (-) zulässig.
5. Ist das Ergebnis einer Rechenoperation <0, wird die Zahl 10 zum ersten Operanden addiert und damit weiter gerechnet.

Beispiele dazu:

| **Rechenaufgabe** | **Lösungsweg** | **dopelN- Eingabecode** | **Erklörung zur Lösung** |
|---|---|---|---|
| 1 + 1 =? | 1 + 1 = 2 | 2 | Die Einerstelle entspricht der Lösung. |
| 6-3=? | 8-3=3 | 3 | |
| 1 + 9 =? | 1 + 9 = 10 | 0 | |
| 9 + 7 =? | 9 + 7 = 16 | 6 | |
| 2 - 3 =? | 2 - 3 ⇒ 10 + 2 - 3 ⇒ 12 - 3 = 9 | 9 | ist das Ergebnis <0, wird 10 zum ersten Operanden addiert. Die Einerstelle entspricht der Lösung. |
| 0 - 6 =? | 0 - 6 ⇒ 10 + 0 - 6 ⇒ 10 - 6 = 4 | 4 | |

dopeIN-Rechenregeln der Stufe 1b:
Hinweis: Es gelten alle dopeIN-Rechenregeln der Stufe 1a: (1-5), zusätzlich gilt Punkt 6:
1. Es wird unabhängig vom Operator oder Operand immer von links nach rechts gerechnet und je zwei Operanden und einem Operator ein Ergebnis ermittelt.
2. Kommt es bei einem Ergebnis zu einer zweistelligen Dezimalzahl, wird ausschließlich die Einerstelle zur Lösung verwendet.
3. Es gibt nur zwei Operanden und einen Operator.
4. Als Operatoren sind ausschließlich die Addition (+) oder Subtraktion (-) zulässig.
5. Ist das Ergebnis einer Rechenoperation <0, wird die Zahl 10 zum ersten Operanden addiert und damit weiter gerechnet.
6. Operatoren für die Multiplikation (*) und die Division (/) werden integriert. Sie stehen allerdings als Platzhalter, wobei (*) als Platzhalter für die Addition und (/) als Platzhalter für die Subtraktion stehen.

Beispiele dazu:

| **Rechenaufgabe** | **Lösungsweg** | **dopeIN-Eingabecode** | **Erklärung zur Lösung** |
|---|---|---|---|
| 1 + 9 =? | 1 + 9 = 10 | 0 | Die Einerstelle entspricht der Lösung. |
| 1 _{*} 9 =? | 1 _{*} 9 ⇒ 1 + 9 = 10 | 0 | (*) wird als (+) interpretiert. Die Einersteile entspricht der Lösung. |
| 4/5 =? | 4/5 ⇒ 4 - 5 ⇒ 10 + 4 - 5 ⇒ 14 - 5 = 9 | 9 | (/) wird als (-) interpretiert. Ist das Ergebnis <0, wird 10 zum ersten Operanden addiert. Die Einerstelle entspricht der Lösung. |

dopeIN-Rechenregeln der Stufe 1c:
Hinweis: Es gelten die dopeIN-Rechenregeln der Stufe 1a: (1-3 und 5), geändert bzw. ergänzt werden die Punkte 4 und 6:
1. Es wird unabhängig vom Operator oder Operand immer von links nach rechts gerechnet und je zwei Operanden und einem Operator ein Ergebnis ermittelt.
2. Kommt es bei einem Ergebnis zu einer zweistelligen Dezimalzahl, wird ausschließlich die Einerstelle zur Lösung verwendet.
3. Es gibt nur zwei Operanden und einen Operator.
4. Als Operatoren sind ausschließlich die Addition (+), die Subtraktion (-) und die Multiplikation (*) zulässig.
5. Ist das Ergebnis einer Rechenoperation <0, wird die Zahl 10 zum ersten Operanden addiert und damit weiter gerechnet.
6. Die Division (/) wird integriert. Sie steht allerdings als Platzhalter für die Subtraktion.

Beispiele dazu:

| **Rechanaufgabe** | **Lösungsweg** | **dopeIN-Eingabecode** | **Erklärung zur Lösung** |
|---|---|---|---|
| 3_{*} 9 =? | 3 _{*} 9 = 27 | 7 | Die Einerstelle entspricht der Lösung |
| 7_{*} 8 =? | 7 * 8 = 56 | 6 | |
| 3/7 =? | 3/7 ⇒ 3 - 7 ⇒ 10 + 3 - 7 ⇒ 13 - 7 = 6 | 6 | (/) wird als (-) interpretiert. Ist das Ergebnis <0, wird 10 zum ensten Operanden eddiert. Die Einerstelle entspricht der Lösung. |

dopeIN-Rechenregeln der Stufe 1d:
Hinweis: Es gelten die dopeIN-Rechenregeln der Stufe 1c: (1, 3, 4, 5, 6), geändert wird Punkt 2:
1. Es wird unabhängig vom Operator oder Operand immer von links nach rechts gerechnet und je zwei Operanden und einem Operator ein Ergebnis ermittelt.
2. Kommt es bei einem Ergebnis zu einer zweistelligen Dezimalzahl >10, wird ausschließlich die Zehnerstelle zur Lösung verwendet.
3. Es gibt nur zwei Operanden und einen Operator.
4. Als Operatoren sind ausschließlich die Addition (+), die Subtraktion (-) und die Multiplikation (*) zulässig.
5. Ist das Ergebnis einer Rechenoperation <0, wird die Zahl 10 zum ersten Operanden addiert und damit weiter gerechnet.
6. Die Division (/) wird integriert. Sie steht allerdings als Platzhalter für die Subtraktion.

Beispiele dazu:

| **Rechenaufgabe** | **Lösungsweg** | **dopeIN-Eingabecode** | **Erklärung zur Lösung** |
|---|---|---|---|
| 3 _{*} 9 =? | 3_{*} 9 = 27 | 2 | Ist das Ergebnis >10, entspricht die Zehnerstelle der Lösung |
| 7 _{*} 8 =? | 7_{*} 8 = 56 | 5 | |
| 1/1 =? | 1/1 ⇒ 1 - 1 = 0 | 0 | (/) wird als (-) interpretiert. Ist das Ergebris < = 10, antspricht die Einerstelle der Lösung. |
| 5 _{*} 2 =? | 5_{*} 2 = 10 | 0 | Ist das Ergebnis < = 10, entspricht die Einerstelle der Lösung. |
| 5 + 7 =? | 5 + 7 = 12 | 1 | Ist das Ergebnis >10, entspricht die Zehnerstelle der Lösung |
| 8/9 =? | 8/9 ⇒ 8 - 9 ⇒ 10 + 8 - 9 ⇒ 18 - 9 = 9 | 9 | (/) wird als (-) interpretiert. Ist das Ergebnis <0, wird 10 zum ersten Operand addiert Die Einerstelle entspricht der Lösung. |

dopeIN-Rechenregeln der Stufe 1e:
Hinweis: Es gelten die dopeIN-Rechenregel der Stufe 1a: (1 und 3), geändert werden die Punkte 2,4,5:
1. Es wird unabhängig vom Operator oder Operand immer von links nach rechts gerechnet und je zwei Operanden und einem Operator ein Ergebnis ermittelt.
2. Kommt es bei einem Ergebnis zu einer zweistelligen Dezimalzahl, wird die Quersumme gebildet und die Einerstelle dieser Quersumme als Ergebnis verwendet.
3. Es gibt nur zwei Operanden und einen Operator.
4. Als Operatoren sind ausschließlich die Addition (+) und die Multiplikation (*) zulässig.
5. Operatoren für die Subtraktion (-) und die Division (/) werden integriert. Sie stehen allerdings als Platzhalter, wobei (-) und (/) als Platzhalter für die Addition stehen.

Beispiele dazu:

| **Rechenaufgabe** | **Lösungsweg** | **dopeIN-Eingabecode** | **Erklärung zur Lösung** |
|---|---|---|---|
| 5 _{*} 5 =? | 5 _{*} 5 = 25 ⇒ 2 + 5 = 7 | 7 | Ist das Ergebnis zweistellig, wird die Ouersumme gebildet. Die Einerstelle entspricht der Lösung. |
| 7 _{*} 7 =? | 7 _{*} 7 = 49 ⇒ 4 + 9 = 13 | 3 | |
| 9 - 9 =? | 9 - 9 ⇒ 9 + 9 = 18 ⇒ 1 + 8 = 9 | 9 | (-) wird als (+) interpretiert. Ist das Ergebnis zweistellig, wird die Quersumme gebildet. Die Einerstelle entspricht der Lösung. |
| 1/9 =? | 1/9 ⇒ 1 + 9 = 10 ⇒ 1 + = 1 | 1 | (/) wird als (+) interpretiert. Ist das Ergebnis zwelstellig, wird die Quersumme gebildet. Die Einerstelle entspricht der Lösung. |

dopeIN-Rechenregeln der Stufe 2a:
1. Es wird unabhängig vom Operator immer von links nach rechts gerechnet, die "Punkt vor Strich - Regel" bleibt außer acht, dabei bilden je zwei Operanden und ein Operator ein Zwischenergebnis, solange bis ein Ergebnis ermittelt werden kann.
2. Kommt es bei einem Zwischenergebnis oder Ergebnis zu einer zweistelligen Dezimalzahl >18, wird ausschließlich die Einerstelle zur Zwischenlösung oder Lösung verwendet.
3. Es gibt mehrere Operanden und mehrere Operatoren.
4. Als Operatoren sind ausschließlich die Addition (+) oder Subtraktion (-) zulässig.
5. Ist das Ergebnis einer Rechenoperation <0, wird die Zahl 10 zum ersten Operanden addiert und damit weiter gerechnet.

Beispiele dazu:

| **Rechenaufgabe** | **Lösungsweg** | **dopeIN-Eingabecode** | **Erklärung zur Lösung** |
|---|---|---|---|
| 1 + 9 + 2 =? | 1 + 9 + 2 ⇒ 10 + 2 = 12 | 2 | Die Einerstelle entspricht der Lösung. |
| 5 - 6 + 1 =? | 5 - 6 + 1 ⇒ 10 + 5 - 6 + 1 ⇒ 15 - 6 + 1 ⇒ 9 + 1 = 10 | 0 | Ist das Ergebnis <0, wird 10 zum ersten Operanden addiert. Die Einerstelle entspricht der Lösung. |
| 2 - 3 + 9 =? | 2 - 3 + 9 ⇒ 10 + 2 - 3 + 9 ⇒ 12 - 3 + 9 ⇒ 9 + 9 = 18 | 8 | Ist das Ergebnis <0, wird 10 zum ersten Operanden addiert. Die Einerstelle entspricht der Lösung. |
| 4 - 1 + 2 - 3 =? | 4 - 1 + 2 - 3 ⇒ 3 + 2 - 3 ⇒ 5-3=2 | 2 | Die Einerstelle entspricht der Lösung. |

dopeIN-Rechenregeln der Stufe 2b:
Hinweis: Es gelten alle dopeIN-Rechenregeln der Stufe 2a: (1-5), zusätzlich gilt Punkt 6:
1. Es wird unabhängig vom Operator immer von links nach rechts gerechnet, die "Punkt vor Strich - Regel" bleibt außer acht, dabei bilden je zwei Operanden und ein Operator ein Zwischenergebnis, solange bis ein Ergebnis ermittelt werden kann.
2. Kommt es bei einem Zwischenergebnis oder Ergebnis zu einer zweistelligen Dezimalzahl >18, wird ausschließlich die Einerstelle zur Zwischenlösung oder Lösung verwendet.
3. Es gibt mehrere Operanden und mehrere Operatoren.
4. Als Operatoren sind ausschließlich die Addition (+) oder Subtraktion (-) zulässig.
5. Ist das Ergebnis einer Rechenoperation <0, wird die Zahl 10 zum ersten Operanden addiert und damit weiter gerechnet.
6. Operatoren für die Multiplikation (*) und die Division (/) werden integriert. Sie stehen allerdings als Platzhalter, wobei (*) als Platzhalter für die Addition und (/) als Platzhalter für die Subtraktion stehen.

Beispiele dazu:

| **Rechenaufgabe** | **Lösungsweg** | **dopeIN-Eingabecode** | **Erklärung zur Lösung** |
|---|---|---|---|
| 3_{*} 4 _{*} 9 + 1/2 =? | 3 _{*} 4 _{*} 9 + 1/2 ⇒ 3 + 4_{*} 9+ 1/2 ⇒ 7 _{*} 9 + 1/2 ⇒ 7 + 9 + 1/2 ⇒ 16 + 1/2 ⇒ 16 + 1 - 2 ⇒ 17 - 2 = 15 | 5 | (*) wird als (+) interpretiert. (/) wird als (-) interpretiert. Die Einerstelle entspricht der Lösung. |
| 1 - 9_{*} 3 =? | 1 - 9 _{*} 3 ⇒ 10 + 1 - 9 _{*} 3 ⇒ 11 - 9 _{*} 3 ⇒ 2_{*} 3 ⇒ 2 + 3 = 5 | 5 | (*) wird als (+) interpretiert. Das Zwischenergebnis wird <0, weshalb 10 zum ersten Operand addiert werden. (/) wird als (-) interpretiert. Die Einerstelle entspricht der Lösung. |

dopeIN-Rechenregeln der Stufe 2c:
Hinweis: Es gelten die dopeIN-Rechenregeln der Stufe 2a: (1-3 und 5), geändert bzw. ergänzt werden die Punkte 4 und 6:
1. Es wird unabhängig vom Operator immer von links nach rechts gerechnet, die "Punkt vor Strich - Regel" bleibt außer acht, dabei bilden je zwei Operanden und ein Operator ein Zwischenergebnis, solange bis ein Ergebnis ermittelt werden kann.
2. Kommt es bei einem Zwischenergebnis oder Ergebnis zu einer zweistelligen Dezimalzahl >18, wird ausschließlich die Einerstelle zur Zwischenlösung oder Lösung verwendet.
3. Es gibt mehrere Operanden und mehrere Operatoren.
4. Als Operatoren sind ausschließlich die Addition (+), die Subtraktion (-) und die Multiplikation (*) zulässig.
5. Ist das Ergebnis einer Rechenoperation <0, wird die Zahl 10 zum ersten Operanden addiert und damit weiter gerechnet.
6. Die Division (/) wird integriert. Sie steht allerdings als Platzhalter für die Subtraktion.

Beispiel dazu:

| **Rechensufgabe** und **Lösungsweg** | **dopeIN-Eingabecode** | **Erklärung zur Lösung** |
|---|---|---|
| 5/2 _{*} 9 - 8 | 9 | |
| ⇓ | | (/) wird als (-) interpretiert. |
| 5 - 2 _{*} 9 - 8 | | |
| ⇓ | | |
| 3 _{*} 9 = 8 | | |
| ⇓ | | |
| 27 - 8 | | |
| ⇓ | | Ist das Zwischenergebnis zweistellig und >18, wird die Einerstelle zur weiteren Berechnung genutzt. |
| 7 - 8 | | |
| ⇓ | | Ist das Ergebnis <0, wird 10 zum ersten Operand addiert. |
| 10 + 7 - 8 ⇓ | | |
| | | |
| 17 - 8 = 9 | | Die Einerstelle entspricht der Lösung. |

Mittels dopeIN-Phrasen 124 werden syntaktische Einheiten definiert, die ihre Wertzuweisungen während der dopeIN-Datenverarbeitung 105,106 technisch und kognitiv 102, 103 erhalten.

### Beispiele: dopeIN-Phrasen

In der nachfolgend Tabelle werden Beispiele für dopeIN-Phrasen 124 aufgelistet und diese mit einem Kennzeichen verknüpft. Zum besseren Verständnis wird zusätzlich der Datentyp aufgeführt, auf Bezugsziffern aber bewusst verzichtet.

| **Wert der dopeIN-Phrase** | **Kennzeichen** | **Datentyp** | **Bemerkung** |
|---|---|---|---|
| bitte | A | text | |
| EXTra | B | text | |
| scharf | C | text | |
| m1t | D | text | |
| S4hn3 | E | text | |
| (DDMMYYYY-hh:rnm:ss) | F | text | dynamische Zuordnung von Systemdatum und Systemzeit im beschriebenen Format (z.B. : 25.12.2017-11:11:11) |

Mit Hilfe von dopeIN-Mustern 119 können temporäre Authentisierungsdaten 109 generiert (siehe dopeIN-Generierungs-Prozedur 105) und im späteren Prüfprozess analysiert und verifiziert (siehe dopeIN-Verifizierungs-Prozedur 106) werden.

dopeIN-Muster 119 werden in mehrere Ebenen unterteilt. Die Ebenen werden wie folgt benannt:
- dopeIN-Betrachtungsebenen 122
- dopeIN-Zuweisungsebenen 121

Erst wenn der dopeIN-Benutzer 101 bei einer sicherheitsrelevanten Aktion 102 das dopeIN-Muster 119 mit seinen Ebenen 121, 122 kennt, ist dieser in der Lage die Authentisierungsdaten 109 korrekt zu interpretieren.

Die Erzeugung und Verwendung von dopeIN-Mustern 119 obliegt dem dopeIN-Benutzer 101 und richtet sich ggf. nach den Vorgaben der dopeIN-Administration 116, die das dopeIN-Verfahren 1000 nutzt bzw. implementiert.

Die dopeIN-Betrachtungsebenen 122 befassen sich mit den individuellen Sichtweisen auf die temporären Authentisierungsdaten 109. Sie legen den Fokus auf die Auswahl der unterschiedlichen Dezimalzahlen, Operatoren und / oder Zeichen. Dabei werden Bezüge der Stellenwerte der Anzeigepaare zu den Stellenwerten des temporären dopeIN-Eingabecodes 112 definiert. Nachfolgend sind Beispiele für unterschiedliche dopeIN-Betrachtungsebenen 122 skizziert, wobei auf Bezugsziffern bewusst verzichtet wurde.

### Beispiele: dopeIN-Betrachtungsebenen (zweizeilige Anzeige / vierstellige Zuordnung)

Anbei sind Beispiele von dopeIN-Betrachtungsebenen 122 einer zweizeiligen dopeIN-Anzeige der Authentisierungsdaten 109, 110 und der vierstelligen Zuordnung zur Interpretation eines zu lösenden dopeIN-Eingabecodes 112 angeführt.
- Gelesen wird von links nach rechts und von oben nach unten.
- Die kleinen Zahlen von 1 - 4 benennen die Zuordnung zur Dezimalstelle des dopeIN-Eingabecodes 112.

| **Bezeichnung der dopelN-Betrachtungsebene** | **dopeIN-Anzeige** | **Erklärung der Zuordnung zur Dezimalstelle des dopeIN-Eìngabecodes** | | | |
|---|---|---|---|---|---|
| | | 1 ⇒ 10³ | 2 ⇒ 10² | 3 ⇒ 10¹ | 4 ⇒ 10⁰ |
| vertikal | 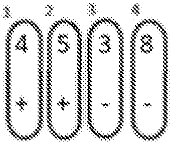 | 4+ | 5+ | 3- | 8- |
| dìagonal_A | 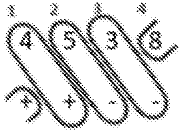 | 4+ | 5- | 3- | 8+ |
| ìndividuell_1 | 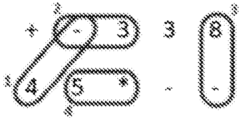 | -4 | -3 | 8- | 5_{*} |
| individuell_2 | 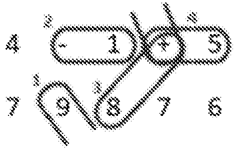 | +9 | -1 | +8 | +5 |

### Beispiele: dopeIN-Betrachtungsebenen (vierzeilige Anzeige / individuelle Zuordnung)

In den nachfolgenden Beispielen sind dopeIN-Betrachtungsebenen 122 einer vierzeiligen dopeIN-Anzeige 109, 110 und der individuellen Zuordnung zur Interpretation eines zu lösenden dopeIN-Eingabecodes 112 dargestellt.
- Gelesen wird von links nach rechts und von oben nach unten.
- Die kleinen Zahlen von 1 - 8 benennen die Zuordnung zur Dezimalstelle des dopeIN-Eingabecodes 112.

| **Bezeichnung der dopeIN-Betrachtungsebene** | **dopeIN-Anzeige** | **Erklärung der Zuordnung zur Dezimalstelle des dopeIN-Eingabecodes** | | | | | | | |
|---|---|---|---|---|---|---|---|---|---|
| | | 1 ⇒ 10⁷ | 2 ⇒ 10⁶ | 3 ⇒ 10⁵ | 4 ⇒ 10⁴ | 5 ⇒ 10³ | 6 ⇒ 10² | 7 ⇒ 10¹ | 8 ⇒ 10⁰ |
| individuell_A | 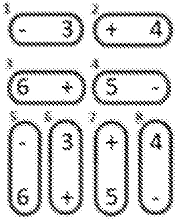 | -3 | +4 | 6+ | 5- | -6 | 3+ | +5 | 4- |
| | | keine Zuordnung | | | | 1 ⇒ 10³ | 2 ⇒ 10² | 3 ⇒ 10¹ | 4 ⇒ 10⁰ |
| individuell_B | 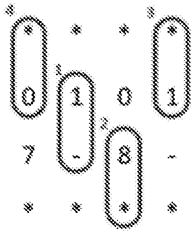 | | | | | 1- | 8_{*} | _{*}1 | _{*}0 |
| | | keine Zuordnung | | | | | 1 ⇒ 10³ | 2 ⇒ 10² | 3 ⇒ |
| vertikal_big | 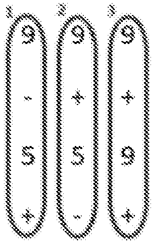 | | | | | | 9 - 5+ | 9 + 5- | 9 + 9+ |

### Beispiele: dopeIN-Betrachtungsebenen (einzeilige Anzeige / fünfstellige Zuordnung)

In den nachfolgenden Beispielen sind dopeIN-Betrachtungsebenen 122 einer einzeiligen dopeIN-Anzeige der Authentisierungsdaten 109, 110 und der fünfstelligen Zuordnung zur Interpretation eines zu lösenden dopeIN-Eingabecodes 112 aufgeführt.
- Gelesen wird von links nach rechts und von oben nach unten.
- Die kleinen Zahlen von 1 - 5 benennen die Zuordnung zur Dezimalstelle des dopeIN-Eingabecodes 112.

| Bezeichnung der dopelN-Betrachtungsebene | dopelN-Anzeige | Erklärung der Zuordnung zur Dezimalstelle des dopelN-Eingabecodes | | | | |
|---|---|---|---|---|---|---|
| | | 1 ⇒ 10³ | 2 ⇒ 10³ | 3 ⇒ 10³ | 4 ⇒ 10¹ | 5 ⇒ 10⁰ |
| meinSicht_01 | 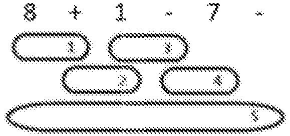 | 8+ | | 1- | -7 | 8 + 1 - 7- |
| meinSicht_02 | 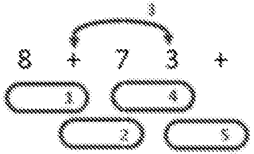 | 8+ | +1 +7 | +3 | 73 | 3+ |

Die dopeIN-Zuweisungsebenen 121 befassen sich mit der Positionierung von dopeIN-Regelwerken 120 sowie dopeIN-Betrachtungsebenen 122, welche in Form von dopeIN-Zuweisungsmustern 126 zugewiesen werden. dopeIN-Phrasen 124, Operatoren, Operanden, Zwischenergebnisse, Ergebnisse und dopeIN-Rechenregeln 123 können dabei zugeordnet werden. Es können vorgegebene dopeIN-Zuweisungsmuster 126 genutzt oder individuelle dopeIN-Zuweisungsmuster 126 als Basis für die Zuordnungen hinterlegt werden.

Mit Hilfe der Zuweisung von zufallsbedingten Werten innerhalb von dopeIN-Zuweisungsmustern 126 wird die physikalische Eingabe 103 des temporären dopeIN-Eingabecodes 112 auf dem gesamten Eingabefeld verteilt. Dies erschwert die Ableitung von Druckspuren (Schmutzprofile, Fingerspuren etc. ) deutlich.

Bei der Gestaltung von dopeIN-Zuweisungsmustern 126 sind die Interpretation und Zuordnung mehrerer Authentisierungscodes und / oder weiterer Software- und / oder Hardware-Komponenten als ergänzende Sicherheitsstufen (vgl. [009]) möglich. Alle angewandten Sicherheitsfragmente können parallel in einem einzigen Schritt, mittels Eingabe des dopeIN-Eingabecodes 112, dem Authentisierungsprozess hinzugefügt werden. Dadurch wird der Authentisierungsprozess beschleunigt.

Bei technischen Authentisierungssystemen 100, welche nur einzeilige oder keine Darstellungen der Authentisierungsdaten 109, 110 ermöglichen, macht es Sinn einen statischen Operator zu definieren. Auch statisch hinterlegte alternierende Operatoren oder Operanden, welche einem vordefinierten statischen dopeIN-Zuweisungsmuster 126 folgen, sind hierbei möglich. Ebenso die Nutzung eines zufallsbedingten Operanden oder eines zufallsbedingten Ergebnisses. Anwendbar ist auch die Interpretation und Zuordnung eines 2FA-Codes und / oder weiterer Software- und / oder Hardware-Komponenten als ergänzende Sicherheitselemente (vgl. [009]).

### Beispiele zu statischen dopeIN-Zuweisungsmustern

### Beispiel 1:

Die nachfolgende Tabelle zeigt beispielhaft die Positionierungs- und Zuordnungsmöglichkeiten von zwei Operanden, einem Operator, dem Ergebnis und einem achtstelligen Authentisierungscode 108 mittels einer einzeiligen Authentisierungsdatenanzeige 109, 110, wobei in Tabelle und Beschreibung auf Bezugsziffern bewusst verzichtet wurde.

Dabei gilt:
- Felder, die als Ergebnis benannt sind, repräsentieren die dopeIN-Anzeige.
- Felder, die als Operand 2 benannt sind, repräsentieren den dopeIN-Eingabecode und werden mit dopeIN[] gekennzeichnet.
- Der Operator wurde als statisches dopeIN-Zuweisungsmuster definiert, dieses wird mit () markiert, es lautet + + - - + - - +.
- Zufallsbedingte Werte sind mit {} markiert.
- Der Authentisierungscode ist statisch, mit PIN markiert und lautet 47110815.
- Es gilt die dopeIN-Betrachtungsebene mit der Bezeichnung vertikal.
- Es gelten die dopeIN-Rechenregeln der Stufe 1a.

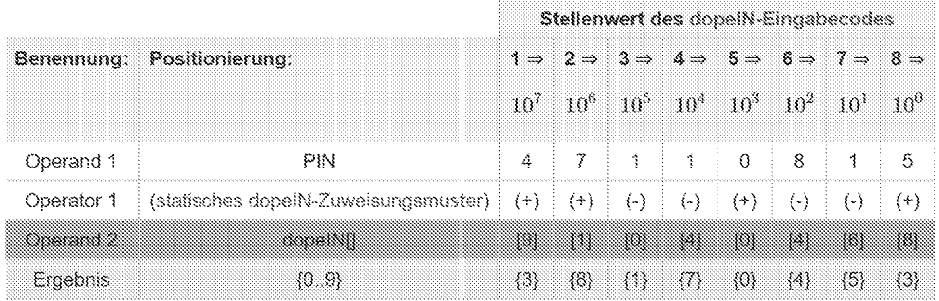

### Beispiel 2:

Die nachfolgende Tabelle zeigt beispielhaft die Positionierungs- und Zuordnungsmöglichkeiten von zwei Operanden, einem Operator, dem Ergebnis und einem achtstelligen Authentisierungscode 108 ohne Veröffentlichung/Anzeige der temporär generierten Authentisierungsdaten 109, wobei in Tabelle und Beschreibung auf Bezugsziffern bewusst verzichtet wurde.

Dabei gilt:
- Der Operator wurde als statisches dopeIN-Zuweisungsmuster definiert, dieses wird mit () markiert, es lautet + - + - + - + -.
- Felder, die als Operand 2 benannt sind, repräsentieren den dopeIN-Eingabecode und werden mit dopeIN[] gekennzeichnet.
- Der Authentisierungscode ist statisch, mit PIN markiert und lautet 47110815.
- Das Ergebnis ist dynamisch, mit {DDMMhhmm} markiert, bezieht sich auf das aktuelle Datum und die Uhrzeit, hier 16031255.
- Es gilt die dopeIN-Betrachtungsebene mit der Bezeichnung vertikal.
- Es gelten die dopeIN-Rechenregel der Stufe 1a.

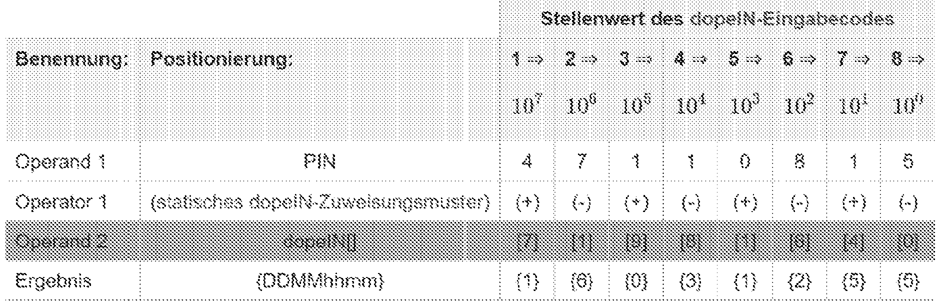

### Beispiel 3:

Die nachfolgende Tabelle zeigt beispielhaft die Verwendung einer individuellen dopeIN-Phrase 124, wobei in Tabelle und Beschreibung auf Bezugsziffern bewusst verzichtet wurde.

Dabei gilt:
- Zufallsbedingte Werte sind mit {} markiert.
- Felder, die als dopeIN[] benannt sind, repräsentieren den dopeIN-Eingabecode.
- Der geheime sichere Authentisierungscode wird mit CODE markiert und lautet meinPASSwort.
- Die individuelle dopeIN-Phrase wird mit
   ∘ !! gekennzeichnet,
   ∘ lautet SuPeR,
   ∘ und wird nach der vierten Stelle des Authentisierungscodes eingefügt.

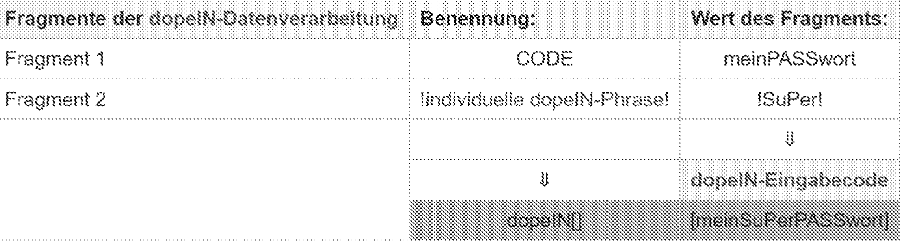

Ein weiterer Sicherheitsfaktor ist die Nutzung von dynamischen dopeIN-Zuweisungsmustern 126. Jedes Sicherheitsfragment, das dynamisch in den Authentisierungsprozess eingebunden wird, bietet einen erhöhten Schutz vor einem ungerechtfertigten Zugriff auf eine sicherheitsrelevante Systemaktion 102.

### Beispiele zu dynamischen dopeIN-Zuweisungsmustern

### Beispiel 1:

Beispiel 1 zeigt die Positionierungs- und Zuordnungsmöglichkeiten von zwei Operanden, einem Operator, dem Ergebnis und einem dreistelligen Authentisierungscode 108, wobei in Tabelle und Beschreibung auf Bezugsziffern bewusst verzichtet wurde.

Dabei gilt:
- Felder, die als Operand 1 und Operator benannt sind, repräsentieren die dopeIN-Anzeige.
- Felder, die als Operand 2 benannt sind, repräsentieren den dopeIN-Eingabecode und werden mit dopeIN[] gekennzeichnet.
- Zufallsbedingte Werte sind mit {} markiert.
- Das Ergebnis ist statisch, repräsentiert den Authentisierungscode, wird mit PIN markiert und lautet 449.
- Es gilt die dopeIN-Betrachtungsebene mit der Bezeichnung vertikal.
- Es gelten die dopeIN-Rechenregeln der Stufe 1a.

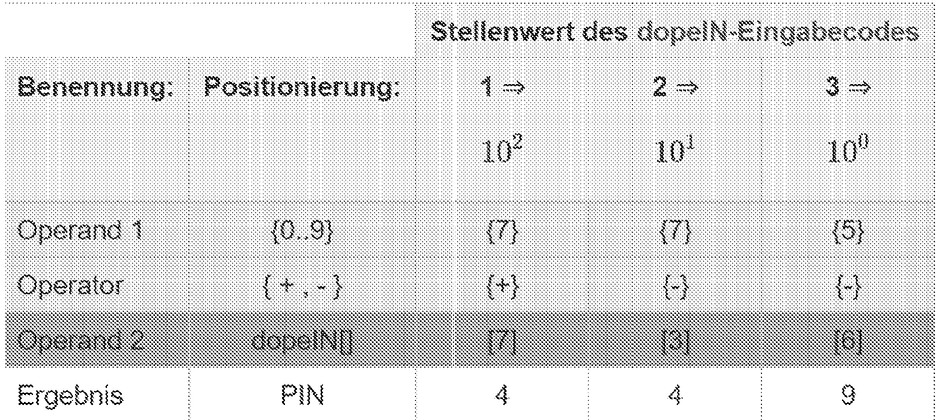

### Beispiel 2:

Die nachfolgende Tabelle zeigt beispielhaft die Positionierungs- und Zuordnungsmöglichkeiten von drei Operanden, einem Operator, dem Ergebnis und einem dreistelligen Authentisierungscode 108, wobei in Tabelle und Beschreibung auf Bezugsziffern bewusst verzichtet wurde.

Dabei gilt:
- Felder, die als Operand 1 und 2 und Operator 1 und 2 benannt sind, repräsentieren die dopeIN-Anzeige.
- Felder, die als Operand 3 benannt sind, repräsentieren den dopeIN-Eingabecode und werden mit dopeIN[] gekennzeichnet.
- Zufallsbedingte Werte sind mit {} markiert.
- Das Ergebnis ist statisch, repräsentiert den Authentisierungscode, wird mit PIN markiert und lautet 333.
- Es gilt die dopeIN-Betrachtungsebene mit der Bezeichnung vertikal_big.
- Es gelten die dopeIN-Rechenregeln der Stufe 2a.

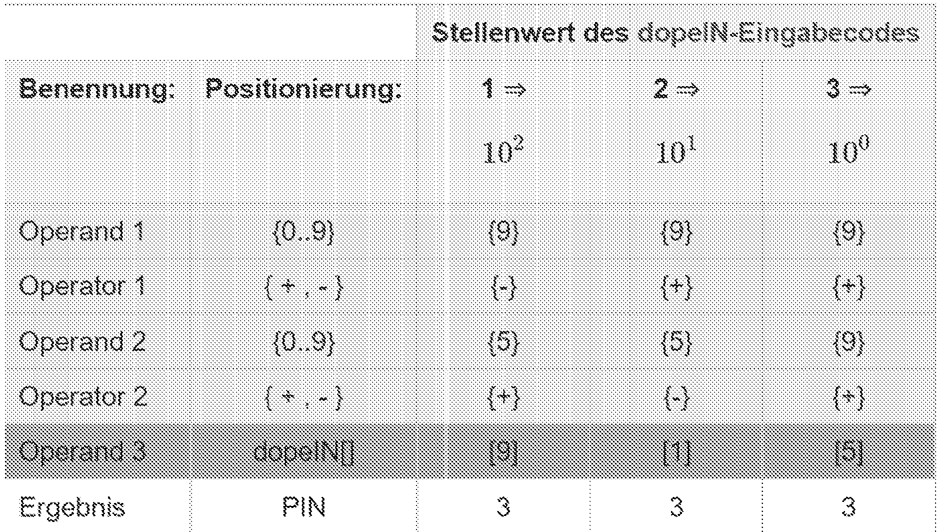

Individuelle dopeIN-Zuweisungsmuster 126 bieten dopeIN-Benutzern 101 den größtmöglichen Freiraum bei der Zuordnung von dopeIN-Betrachtungsebenen 122, dopeIN-Rechenregeln 123 und dopeIN-Phrasen 124. Die Kreativität jedes einzelnen dopeIN-Benutzers 101 kann damit gewinnbringend in die individuelle algorithmusbasierte Multifaktor-Authentisierung (dopeIN) 1000 eingebracht werden.

### Beispiele für individuelle dopeIN-Zuweisungsmuster

### Beispiel 1:

Beispiel 1 zeigt die Verwendung dynamischer Operatoren, die auf Grundlage eines 6-stelligen 2FA-Codes ermittelt werden (vgl. [009]), wobei in Tabelle und Beschreibung auf Bezugsziffern bewusst verzichtet wurde.

Als individuelles dopeIN-Zuweisungsmuster wird Folgendes definiert:
- Ist die jeweilige Dezimalstelle des 2FA-Codes (vgl. [009]). gerade, folgt eine Addition, ist sie ungerade führt dies zur Subtraktion. Ist die Dezimalzahl 0, wird zufallsbedingt eine Multiplikation oder Division generiert.

Dabei gilt:
- Felder, die als Operator 1 und Ergebnis benannt sind, repräsentieren die dopeIN-Anzeige.
- Felder, die als Operand 2 benannt sind, repräsentieren den dopeIN-Eingabecode und werden mit dopeIN[] gekennzeichnet.
- Zufallsbedingte Werte sind mit {} markiert.
- Der Operand 1 ist statisch, repräsentiert den Authentisierungscode, wird mit PIN markiert und lautet 753219.
- Es gilt die dopeIN-Betrachtungsebene mit der Bezeichnung vertikal.
- Es gelten die dopeIN-Rechenregeln der Stufe 1b.
- Es existiert ein individuelles dopeIN-Zuweisungsmuster, das die oben genannte Anforderung erfüllt, dies wird mit !! gekennzeichnet.

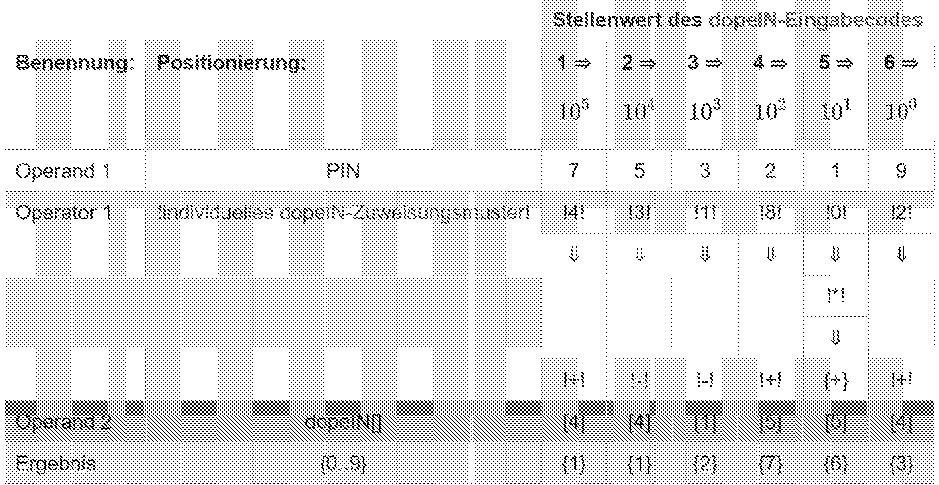

### Beispiel 2:

In diesem Fall wird dem zweiten Operator dynamisch das aktuelle Systemdatum (TT.MM) zugeordnet, hier 13.03. In Tabelle und Beschreibung wurde bewusst auf Bezugsziffern verzichtet.

Dabei gilt:
- Felder, die als Operator 1 benannt sind, repräsentieren die dopeIN-Anzeige.
- Felder, die als Ergebnis benannt sind, repräsentieren den dopeIN-Eingabecode und werden mit dopeIN[] gekennzeichnet.
- Zufallsbedingte Werte sind mit {} markiert.
- Der Operand list statisch, repräsentiert den Authentisierungscode ,wird mit PIN markiert und lautet 0815.
- Es gilt die dopeIN-Betrachtungsebene mit der Bezeichnung vertikal.
- Es gelten die dopeIN-Rechenregeln der Stufe 1a.
- Es existiert ein individuelles dopeIN-Zuweisungsmuster, das die oben genannten Anforderungen erfüllt, dieses wird mit !! gekennzeichnet.

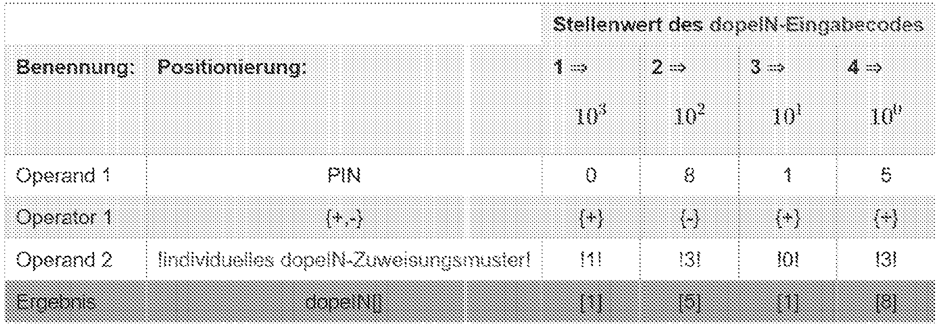

### Beispiel 3:

In diesem Beispiel wird die aktuelle Systemzeit (hh:mm) dynamisch dem zweiten Operator zugeordnet, hier 16:55. Zusätzlich ändert sich die Position des dopeIN-Eingabecodes 112 je Dezimalstelle auf Basis einer zuvor definierten Positionierungskennzeichung.

Die nachfolgende Tabelle zeigt beispielhaft alle Permutationen mit ihrer jeweiligen Zuweisung, welche sich bei Nutzung von zwei Operanden und einem Operator ergeben können und ordnet ein Positionierungskennzeichen zu. In Tabellen und Beschreibung wurde bewusst auf Bezugsziffern verzichtet.

Dabei gilt:
- Die Felder Operand 1 B & C, Operator A bis F, Operand 2 A & D sowie Ergebnis E & F repräsentieren die dopeIN-Anzeige.
- Die Felder Operand 1 D & F, Operand 2 C & E sowie Ergebnis A & B repräsentieren den dopeIN-Eingabecode und werden mit dopeIN[] gekennzeichnet.
- Zufallsbedingte Werte sind mit {} markiert.
- Der geheime sichere Authentisierungscode wird mit PIN markiert.

| | Positionierungskennzeichen | | | | | |
|---|---|---|---|---|---|---|
| Benennung: | A | B | C | D | E | F |
| Operand 1 Operator Operand 2 Ergebnis | PIN { + , - } {0..9} dopeIN[] | {0..9} { + , - } PIN dopeIN[] | {0..9} { + , - } dopeIN[] PIN | dopeIN[] { + , - } {0..9} PIN | PIN { + , - } dopeIN[] {0..9} | dopeIN[] { + , - } PIN {0..9} |

Beim individuellen dopeIN-Zuweisungsmuster gilt:
- Felder, die als Operator 1 benannt sind, repräsentieren die dopeIN-Anzeige.
- Die Felder Operand 1 D & D sowie Ergebnis A & A, repräsentieren den dopeIN-Eingabecode.
- Zufallsbedingte Werte sind mit {} markiert.
- Der Authentisierungscode ist statisch, wird mit PIN markiert und lautet 4711.
- Es gilt die dopeIN-Betrachtungsebene mit der Bezeichnung vertikal.
- Es gelten die dopeIN-Rechenregeln der Stufe 1a.
- Es existiert ein individuelles dopeIN-Zuweisungsmuster, das die oben genannten Anforderungen erfüllt, dieses wird mit !! gekennzeichnet. Die aktuelle Uhrzeit lautet 16:55.
- Es erfolgt eine individuelle Zuweisung der Operanden, des Authentisierungscodes und des Ergebnisses je Dezimalstelle auf Basis der Positionierungskennzeichung.

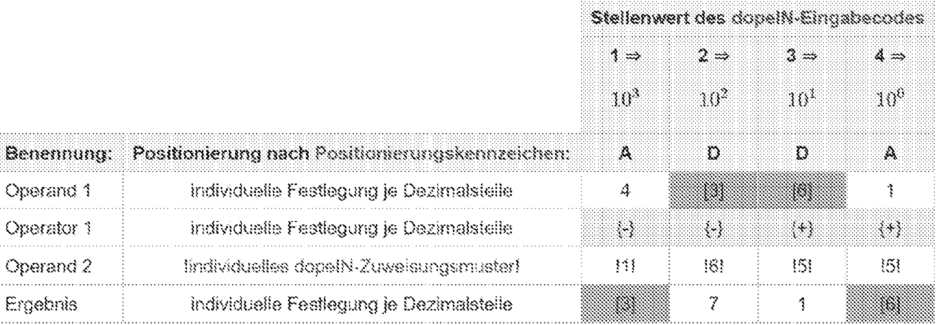

### Beispiel 4:

Beispiel 4 zeigt beispielhaft die Positionierungs- und Zuordnungsmöglichkeiten von zwei Operanden, einem Operator, dem Ergebnis und einem 8-stelligen Authentisierungscode 108 auf einer einzeiligen Authentisierungsdatenanzeige 109, 110. Es kommen statische dopeIN-Zuweisungsmuster 126 für den Operator und individuelle dopeIN-Zuweisungsmuster 126 für die anzuwendenden dopeIN-Rechenregeln 123 zum Einsatz. In Tabelle und Beschreibung wurde bewusst auf Bezugsziffern verzichtet.

Dabei gilt:
- Felder, die als Ergebnis benannt sind, repräsentieren die dopeIN-Anzeige.
- Felder, die als Operand 2 benannt sind, repräsentieren den dopeIN-Eingabecode und werden mit dopeIN[] gekennzeichnet.
- Der Operator wurde als statisches dopeIN-Zuweisungsmuster definiert. Dieses wird mit () markiert. Es lautet + * - / / * * / .
- Zufallsbedingte Werte sind mit {} markiert.
- Der Operand 2 ist statisch, repräsentiert den Authentisierungscode, wird mit PIN markiert und lautet 47110815.
- Es gilt die dopeIN-Betrachtungsebene mit der Bezeichnung vertikal.
- Je Dezimalstelle gilt eine individuell zugewiesene dopeIN-Rechenregel.

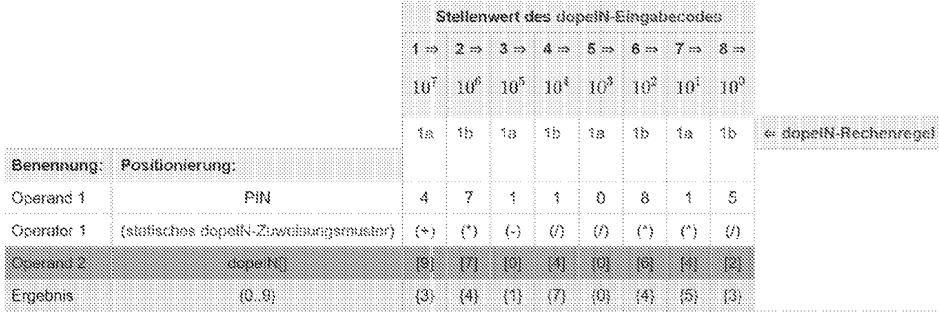

### Beispiel 5:

Beispiel 5 zeigt die Verwendung einer individuellen dopeIN-Phrase 124, die dynamisch angepasst und an einer bestimmten Stelle des sicheren Authentisierungscodes 108 hinzugefügt wird. Eine weitere individuelle dopeIN-Phrase 124 wird mittels der Tabelle: Beispiele: dopeIN-Phrasen (vgl. [041]) zugeordnet und am Ende des Authentisierungscodes 108 ergänzt. Auf eine Veröffentlichung/Anzeige temporär generierter Authentisierungsdaten 109 wird verzichtet. In Tabelle und Beschreibung wurde bewusst auf Bezugsziffern verzichtet.

Dabei gilt:
• Felder, die als dopeIN[] benannt sind, repräsentieren den dopeIN-Eingabecode.
• Der geheime sichere Authentisierungscode wird mit PASSWORT markiert und lautet mein&&wort.
• Die geheime individuelle dopeIN-Phrase
∘ wird mit !! gekennzeichnet,
∘ wird nach der Stelle des ersten & Zeichens des Authentisierungscodes eingefügt,
∘ ist dynamisch und entspricht dem heutigen Sytemdatum (DDMM), hier 24.12.

• Eine weitere individuelle dopeIN-Phrase wird
∘ mit Hilfe der individuellen Tabelle Beispiele: dopeIN-Phrasen / Kennzeichen: B zugeordnet, hier EXTra,
∘ mit !! gekennzeichnet,
∘ und an die letzte Stelle des Authentisierungscodes eingefügt.

| **Fragmente der dopeIN-Datenverarbeitung** | **Benennung:** | **Wert des Fragments** |
|---|---|---|
| Fragment 1 | PASSWORT | mein&&wort |
| Fragment 2 | !individuelle dopeIN-Phrase! | !2412! |
| Fragment 3 | !Beispiele: Phrasen / Kennzeichen: B! | !EXTra! |
| | ⇓ | ⇓ |
| | | dopeIN-Eingabecode |
| | dopeIN[] | [mein&2412&wortEXTra] |

### Beispiel 6:

Beispiel 6 zeigt die Verwendung einer individuellen dopeIN-Phrase 124, die dynamisch angepasst und an einer bestimmten Stelle des sicheren Authentisierungscodes 108 hinzugefügt wird. Die dynamische Anpassung erfolgt hier mittels mehrerer Datenverarbeitungsvorgänge. In Tabelle und Beschreibung wurde bewusst auf Bezugsziffern verzichtet.

Dabei gilt:
- Felder, die als Operator 1 benannt sind, repräsentieren die dopeIN-Anzeige.
- Felder, die als dopeIN[] benannt sind, repräsentieren den dopeIN-Eingabecode.
- zufallsbedingte Werte sind mit {} markiert.
- Der Authentisierungscode wird mit CODE markiert und lautet pa{ }s{ }st.
- Der Operand 1 ist statisch, repräsentiert einen weiteren Authentisierungscode, wird mit PIN markiert und lautet 1357.
- Die geheime individuelle dopeIN-Phrase
   ∘ wird mit !! gekennzeichnet,
   ∘ ersetzt alle {} Zeichen des Authentisierungscodes,
   ∘ wird mit Hilfe der globalen dopeIN-Rechenregeln der Stufe 1a ermittelt,
   ∘ ist dynamisch und entspricht der Systemzeit (hhmm), hier 11:55.

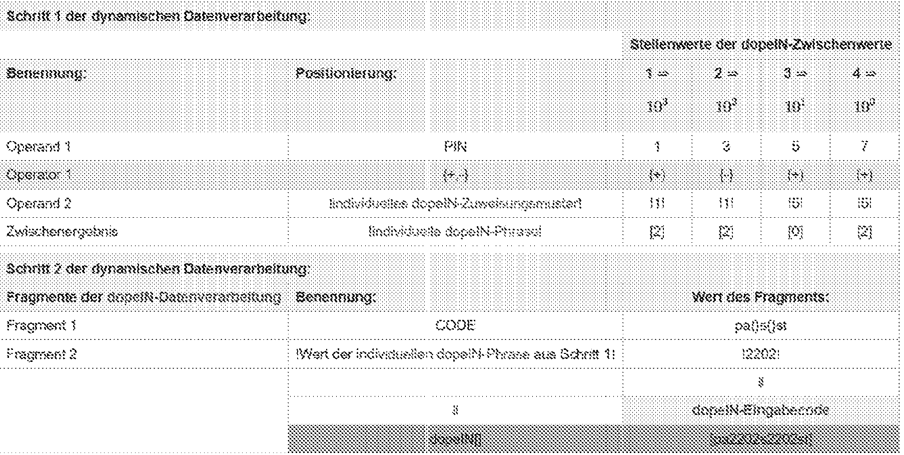

Der dopeIN-Benutzer 101 kann unmittelbaren Einfluss auf die dopeIN-Anzeige 110 nehmen. Dadurch kann der dopeIN-Benutzer 101 optische Kennzeichnungen vornehmen, die ihn erkennen lassen, ob die dopeIN-Anzeige 110 von einem legitimierten technischen Authentisierungssystem 100 erzeugt wurde.

Zum Schutz gegen Phishing (siehe [008]) kann der dopeIN-Benutzer 101 mit Hilfe eines dopeIN-Zuweisungsmusters 126 definieren, dass bestimmte Zeichen und / oder Zahlen der dopeIN-Anzeige 110 in einer bestimmen Farbe, Hintergrundfarbe oder auch Schriftart erscheinen. Werden diese individuell gewählten Kennzeichnungen nicht vom technischen System 101 erfüllt, ist für den dopeIN-Benutzer 101 unmittelbar ersichtlich und zu erwarten, dass das technische Authentisierungssystem 100 korrumpiert wurde.

Es obliegt der Kompetenz und Kreativität sowie der Erfahrung des jeweiligen dopeIN-Benutzers 101 seine eigenen dopeIN[-Algorithmus-Templates] 125 zu definieren und daraus dopeIN-Algorithmen 107 zu generieren. Es existiert eine Vielzahl von Permutationen und Ausprägungen dieser Sicherheitsfragmente. Hier werden in der Beschreibung Möglichkeiten angerissen und grob exemplarisch aufgezeigt.

Durch den Einsatz der individuellen algorithmusbasierten Multifaktor-Authentisierung (dopeIN) 1000 werden weitere Sicherheitsfragmente in den Authentisierungsprozess eingebunden. Daher ist die Neuerstellung und / oder kontinuierliche Änderung des Authentisierungscodes 108 nicht zwingend. Dies erhöht automatisch die Akzeptanz zur Nutzung der individuellen algorithmusbasierten Multifaktor-Authentisierung (dopeIN) 1000 beim individuellen Systembenutzer 101.

Ebenso können die ggf. bereits von der dopeIN-Administration 116 vorgegebenen standardisierten Intervalle zur Änderung von Authentisierungscodes 108 vergrößert werden.

Durch den Einsatz der individuellen algorithmusbasierten Multifaktor-Authentisierung (dopeIN) 1000 wird das individuelle Sicherheitsbedürfnis des dopeIN-Benutzers 101 und / oder der dopeIN-Administration 116 als eigenes Sicherheitsfragment 107 adressiert und technisch abgebildet. Es lässt sich in technischen Authentisierungs- und Sicherheitssystemen 100, 200 implementieren 2000 und innerhalb technischer Authentisierungssysteme 100 anwenden 3000. Zugleich wird eine zugrundeliegende Variabilität gewährleistet, wodurch zukünftige kryptografische Sicherheitstechniken, -verfahren und -erweiterungen flexibel eingebunden werden können. Die Flexibilität und Anpassungsfähigkeit der individuellen algorithmusbasierten Multifaktor-Authentisierung (dopeIN) 1000 hinsichtlich der Nutzerbedürfnisse soll Akzeptanz bei breiten Nutzerschichten fördern.

### Quellen zum Stand der Technik sind:

| **Aktenzeichen** | **Kurzbeschreibung** |
|---|---|
| CH 713 015 A2 | Eingabevorrichtung und Verfahren |
| DE 296 13 938 U1 | Codeeingabesystem für Scheckkartenbezahlungssysteme und Geldautomaten |
| DE 10 2004 002 128 A1 | Vorrichtung und Verfahren von codierten und / oder nichtcodierten Befehlen |
| DE 10 2008 019 034 A1 | Verfahren und Vorrichtung zur Ermittlung eines Zugangscodes |
| DE 10 2009 020 207 A1 | Eingabeterminal und Verfahren zur PIN-Erfassung |
| DE 10 2009 012 011A1 | Geheimzahlen- bzw. Passwort-Eingabesystem für den täglichen Gebrauch in Kaufhäusern zur Gewährleistung der Diskretion |
| US 9 686 275 B2 | Correlating cognitive biometrics for continuous identify verification |
| US 9 672 335 B2 | Cognitive-based logon process for computing device |
| US 10 476 873 B2 | Device, system, and method of password-less user authentication and password-less detection of user identity |
| EP 1 010 049 B1 | Verallgemeinertes Benutzeridentifikations- und -autentifizierungssystem |

## Patentansprüche

1. Verfahren (1000) zur Durchführung eines Authentisierungsprozesses (3000) durch einen individuellen Systembenutzer (101) unter Nutzung Hard- und Software umfassender technischer Sicherheitssysteme (200) zur Erzeugung, Verwaltung und Ausführung eines aus Sicherheitsfragmenten gebildeten Authentisierungsalgorithmus (107) einer individuellen algorithmusbasierten Multifaktor-Authentisierung an einem eine Authentisierung anfordernden technischen Authentisierungssystem (100), wobei das Verfahren umfasst:
(a) das Implementieren (2000) von Sicherheitsfragmenten unter Nutzung des technischen Sicherheitssystems (200) durch einen Administrator (116) und/oder einen den Authentisierungsprozess individualisierenden Systembenutzer (101) zumindest in Form von Mustern (119) und/oder Regelwerken (120) und/oder Algorithmus-Templates (125) zur Erzeugung eines Algorithmus (127) zur Durchführung des Authentisierungs-prozesses (3000) innerhalb eines die Authentisierung (102) anfordernden technischen Authentisierungssystems (100),
(b) das Verwalten (2000) der implementierten Sicherheitsfragmente durch den Administrator (116) und/oder den individuellen Systembenutzer (101) innerhalb des technischen Sicherheitssystems (200),
(c) die Erzeugung (2000) des Authentisierungsalgorithmus (107) aus implementierten Sicherheitsfragmenten (119 bis 126) durch den individuellen Systembenutzer (101) sowie die Verknüpfung dieses Authentisierungsalgorithmus (107) mit einem vom individuellen Systembenutzer (101) bestimmten Authentisierungscode (108), wobei eine Zuordnung des Authentisierungsalgorithmus (107) mit Authentisierungscode (108) zu einem definierten technischen Authentisierungssystem (100) durch den individuellen Systembenutzer (101) erfolgt,
(d) Ausführen (3000) des Authentisierungsprozesses durch eine Legitimation (102) des individuellen Systembenutzers (101) an einem vom Systembenutzer (101) gewählten, eine Authentisierung (102) anfordernden technischen Authentisierungssystem (100), sowie ein automatisiertes Generieren (105) von temporären Authentisierungsdaten (109) mittels Ausführung des Authentisierungsalgorithmus (107) auf dem technischen Authentisierungssystem (100) basierend auf dem für dieses technische Authentisierungssystem (100) im technischen Sicherheitssystem (200) hinterlegten Authentisierungsalgorithmus (107) bezogen auf den Authentisierungscode (108) sowie Übertragung an den individuellen Systembenutzer (101),
wobei ein Datenaustausch zwischen dem den Authentisierungsalgorithmus (107) mit Authentisierungscode (108) verwaltenden technischen Sicherheitssystem (200) und dem eine Authentisierung anfordernden technischen Authentisierungssystem (100) durch Synchronisationsprozesse (117) zum Austausch nicht öffentlicher Daten erfolgt,
(e) Anwendung des Authentisierungsalgorithmus (107) in Verbindung mit dem Authentisierungscode (108) durch den individuellen Systembenutzer (101) zur Umwandlung der temporären Authentisierungsdaten (109) in einen temporären Eingabecode (112) zur Eingabe (103) und Authentisierung (3000) des individuellen Systembenutzers (101) an dem technischen Authentisierungssystem (100) und
(f) Ausführung einer Authentisierungsprüfung (106) des vom individuellen Systembenutzer (101) eingegebenen temporären Eingabecodes (112) durch das technische Sicherheitssystem (200) unter Einbeziehung der generierten temporären Authentisierungsdaten (109) und Anwendung des vom individuellen Systembenutzer (101) erzeugten Authentisierungscodes (108) und Authentisierungsalgorithmus (107) zur Erzeugung eines temporären Ergebnisses (113) der Authentisierungsprüfung (106) zur Auslösung definierter Schritte des Systemablaufs (114) in Abhängigkeit von diesem temporären Ergebnis (113) der Authentisierungsprüfung (106).

2. Verfahren (1000) zur Durchführung eines Authentisierungsprozesses (3000) nach Anspruch 1,
**dadurch gekennzeichnet, dass**
etablierte bekannte kryptografische Sicherheitsmechanismen ins Verfahren integriert sind zur Implementierung der Sicherheitsfragmente und/oder automatisierten Erzeugung (2000) und/oder Ausführung (3000) der Sicherheitsfragmente.

3. Verfahren (1000) zur Durchführung eines Authentisierungsprozesses (3000) nach Anspruch 1 oder 2,
**dadurch gekennzeichnet, dass**
die Komplexität des Authentisierungsprozesses (3000) mit Benutzerinteraktion (118) skalierbar ausgebildet und vom individuellen Systembenutzer (101) beim Implementieren (2000) der Sicherheitsfragmente (107, 119 bis 126) für den Authentisierungsvorgang (102) bestimmbar ist.

4. Verfahren (1000) zur Durchführung eines Authentisierungsprozesses (3000) nach einem der vorangegangenen Ansprüche,
**dadurch gekennzeichnet, dass**
eine Abarbeitung mehrerer Sicherheitstechniken in einem einzigen Schritt parallel mittels einer einzigen Eingabe (103) des individuellen Systembenutzers (101) erfolgt.

5. Verfahren (1000) zur Durchführung eines Authentisierungsprozesses (3000) nach einem der vorangegangenen Ansprüche,
**dadurch gekennzeichnet, dass**
die physikalische Eingabe (103) des temporären Eingabecodes (112) auf einem Eingabefeld erfolgt und im Laufe der Nutzung auf dem gesamten Eingabefeld verteilt abgefragt und eingegeben wird.

6. Verfahren (1000) zur Durchführung eines Authentisierungsprozesses (3000) nach einem der vorangegangenen Ansprüche,
**dadurch gekennzeichnet, dass**
bestehende Authentisierungscodes (108) in den Authentisierungsprozess integrierbar sind und so beibehalten werden können.

7. Verfahren (1000) zur Durchführung eines Authentisierungsprozesses (3000) nach einem der vorangegangenen Ansprüche,
**dadurch gekennzeichnet, dass**
ein individueller Systembenutzer (101) bereits bei der Eingabeaufforderung (111) eines anfragenden Authentisierungssystems (100) durch einen Abgleich der vom individuellen Systembenutzer (101) implementierten Sicherheitsfragmente für die Eingabeaufforderung (111) erkennen kann, ob das anfragende Authentisierungssystem (100) die Legitimation zur Erstellung der Eingabeaufforderung (111) besitzt.

8. Verfahren (1000) zur Durchführung eines Authentisierungsprozesses (3000) nach einem der vorangegangenen Ansprüche,
**dadurch gekennzeichnet, dass**
die Sicherheitsfragmente für die individuelle algorithmusbasierte Multifaktor-Authentisierungen (1000), je nachdem wie die individuelle algorithmusbasierte Multifaktor-Authentisierung (1000) von der Administration (116) implementiert wird, systemintern und/oder systemextern erzeugt, verwaltet (2000) und/oder ausgeführt (3000) werden.

9. Verfahren (1000) zur Durchführung eines Authentisierungsprozesses (3000) nach einem der vorangegangenen Ansprüche,
**dadurch gekennzeichnet, dass**
der individuelle Systembenutzer (101) mittels technischer Elemente und/oder Hilfsmittel (115) Algorithmus-Templates (125) erzeugt (118) und den anzuwendenden Authentisierungsalgorithmus (107) angepasst an seine kognitiven Fähigkeiten in dem Authentisierungsprozess (3000) implementiert, wobei sich mit Algorithmus-Templates (125) die Muster (119) und Regelwerke (120) individuell kombinieren lassen und diese Algorithmus-Templates (125) die Basis zur Generierung (127) der Algorithmen (107) des Authentisierungsprozesses (3000) bilden.

10. Verfahren (1000) zur Durchführung eines Authentisierungsprozesses (3000) nach einem der vorangegangenen Ansprüche,
**dadurch gekennzeichnet, dass**
der individuelle Systembenutzer (101) Benutzerdaten (104), Algorithmen (107), Muster (119), Regelwerke (120), Zuweisungsebenen (121), Betrachtungsebenen (122), Rechenregeln (123), Phrasen (124), Algorithmus-Templates (125) und Zuweisungsmuster (126) definiert und/oder auswählt (118) zur Generierung (127) der Algorithmen (107) .

11. Verfahren (1000) zur Durchführung eines Authentisierungsprozesses (3000) nach einem der vorangegangenen Ansprüche,
**dadurch gekennzeichnet, dass**
die Muster (119) aus Betrachtungsebenen (122) und Zuweisungsebenen (121) bestehen, wobei diese Zuweisungsebenen (121) Zuweisungsmuster (126) beinhalten und
die Regelwerke (120) aus Phrasen (124) und/oder Rechenregeln (123) bestehen.

12. Verfahren (1000) zur Durchführung eines Authentisierungsprozesses (3000) nach einem der vorangegangenen Ansprüche,
**dadurch gekennzeichnet, dass**
ein Authentisierungsalgorithmus (107) aus mindestens einer benutzerdefinierten Generierungs-Prozedur (105) und mindestens einer benutzerdefinierten Verifizierungs-Prozedur (106) besteht.

13. Programmprodukt (115) zur Durchführung eines Authentisierungsprozesses (3000) gemäß dem Verfahren (1000) nach einem der Ansprüche 1 bis 12 zur vollständigen oder teilweisen Verwaltung und Erzeugung von
Benutzerdaten (104), Algorithmen (107), Mustern (119), Regelwerken (120), Zuweisungsebenen (121), Betrachtungsebenen (122), Rechenregeln (123), Phrasen (124), Algorithmus-Templates (125) und Zuweisungsmustern (126) mit von einem technischen Sicherheitssystem (200) und einem technischen Authentisierungssystem (100) ausführbaren Instruktionen sowie der Synchronisation (117) des Authentisierungsalgorithmus (107) zwischen dem technischen Sicherheitssystem (200) und dem Authentisierungssystem (100).

14. Computerprogramm zur Durchführung eines Authentisierungsprozesses (3000) gemäß dem Verfahren (1000) nach einem der Ansprüche 1 bis 12,
wobei das Computerprogramm auf technischen Maschinen zur Datenverarbeitung als technisches Sicherheits- und Authentisierungssystem (100, 200) abläuft.

15. Technische Konstruktion zur Durchführung eines Authentisierungsprozesses (3000) gemäß dem Verfahren (1000) nach einem der Ansprüche 1 bis 12,
wobei die technische Konstruktion mechanische und/oder elektronische Schlösser und/oder Sperrsysteme umfasst sowie die technischen Sicherheits- und Authentisierungssysteme (100), (200) zur Anwendung der individuellen algorithmusbasierten Multifaktor-Authentisierung (1000) mit Zugriff auf die mechanischen und/oder elektronischen Schlösser und/oder Sperrsysteme.
**Bezugszeichenliste**
| Nr. | Bezeichnungen |
|---|---|
| 1000 | individuelle Algorithmus basierte Multifaktor-Authentisierung (kurz: dopeIN oder auch dopeIN-Verfahren) |
| 2000 | Implementierungsphase |
| 3000 | Anwendungsphase |
| 100, 200 | technisches Authentisierungs- und Sicherheitssystem |
| 101 | individueller Systembenutzer = Mensch = Systembenutzer = dopeIN-Benutzer |
| 102 | Legitimation = Systemzugriff auf eine sicherheitsrelevante Aktion |
| 103 | Eingabe |
| 104 | dopeIN-Benutzerdaten |
| 105 | dopeIN-Datenverarbeitung ⇒ dopeIN-Generierungs-Prozedur |
| 106 | dopeIN-Datenverarbeitung ⇒ dopeIN-Verifizierungs-Prozedur |
| 107 | dopeIN-Algorithmus |
| 108 | Authentisierungscode |
| 109 | temporäre Authentisierungsdaten = dopeIN-Anzeige oder auch dopeIN-Authentisierungsdaten |
| 110 | optionale Anzeige der temporären dopeIN- Authentisierungsdaten |
| 111 | Eingabe-Aufforderung |
| 112 | Eingabedaten = temporärer dopeIN-Eingabecode |
| 113 | temporäres Ergebnis der dopeIN-Authentisierungsprüfung |
| 114 | Schritte in Abhängigkeit vom temporären Ergebnis der dopeIN-Authentisierungsprüfung |
| 115 | technische Elemente / Hilfsmittel |
| 116 | dopeIN-Administration |
| 117 | Synchronisationsprozesse = systemeigenes "Verfahren zum Hinterlegen geheimer Authentisierungsdaten und deren Verwendung" |
| 118 | erzeuge / wähle aus |
| 119 | dopeIN-Muster |
| 120 | dopeIN-Regelwerke |
| 121 | dopeIN-Zuweisungsebenen |
| 122 | dopeIN-Betrachtungsebenen |
| 123 | dopeIN-Rechenregeln |
| 124 | dopeIN-Phrase |
| 125 | dopeIN[-Algorithmus-Templates] |
| 126 | dopeIN-Zuweisungsmuster |
| 127 | generiere einen dopeIN-Algorithmus |

## Claims

1. Method (1000) for performing an authentication process (3000) by an individual system user (101), using technical security systems (200) which comprise hardware and software and are intended to generate, manage and execute an authentication algorithm (107), formed from security fragments, of individual algorithm-based multifactor authentication, on a technical authentication system (100) requiring authentication, wherein the method comprises:
(a) the implementation (2000) of security fragments using the technical security system (200) by an administrator (116) and/or a system user (101) individualizing the authentication process at least in the form of patterns (119) and/or sets of rules (120) and/or algorithm templates (125) for generating an algorithm (127) for performing the authentication process (3000) within a technical authentication system (100) requiring the authentication (102),
(b) the management (2000) of the implemented security fragments by the administrator (116) and/or the individual system user (101) within the technical security system (200),
(c) the generation (2000) of the authentication algorithm (107) from implemented security fragments (119 to 126) by the individual system user (101) and the linking of this authentication algorithm (107) to an authentication code (108) determined by the individual system user (101), wherein the authentication algorithm (107) with authentication code (108) is assigned to a defined technical authentication system (100) by the individual system user (101),
(d) performance (3000) of the authentication process by legitimizing (102) the individual system user (101) on a technical authentication system (100) that is selected by the system user (101) and requires authentication (102), and automatically generating (105) temporary authentication data (109) by means of executing the authentication algorithm (107) on the technical authentication system (100) based on the authentication algorithm (107) stored in the technical security system (200) for this technical authentication system (100) with reference to the authentication code (108) and transmitting said data to the individual system user (101), wherein data are exchanged between the technical security system (200) managing the authentication algorithm (107) with authentication code (108) and the technical authentication system (100) requiring authentication by way of synchronization processes (117) for exchanging non-public data,
(e) use of the authentication algorithm (107) in conjunction with the authentication code (108) by the individual system user (101) for the purpose of converting the temporary authentication data (109) into a temporary input code (112) for input (103) and authentication (3000) of the individual system user (101) on the technical authentication system (100), and
(f) performance of an authentication check (106) of the temporary input code (112) input by the individual system user (101) by the technical security system (200), with the inclusion of the generated temporary authentication data (109), and use of the authentication code (108) generated by the individual system user (101) and the authentication algorithm (107) for generating a temporary result (113) of the authentication check (106) for triggering defined steps of the system process (114) on the basis of this temporary result (113) of the authentication check (106).

2. Method (1000) for performing an authentication process (3000) according to Claim 1,
**characterized in that**
established known cryptographic security mechanisms are integrated into the method in order to implement the security fragments and/or to automatically generate (2000) and/or execute (3000) the security fragments.

3. Method (1000) for performing an authentication process (3000) according to Claim 1 or 2,
**characterized in that**
the complexity of the authentication process (3000) with user interaction (118) is scalable and can be determined by the individual system user (101) when implementing (2000) the security fragments (107, 119 to 126) for the authentication process (102).

4. Method (1000) for performing an authentication process (3000) according to any of the preceding claims, **characterized in that**
a plurality of security techniques are processed in a single step in a parallel manner by means of a single input (103) by the individual system user (101).

5. Method (1000) for performing an authentication process (3000) according to any of the preceding claims, **characterized in that**
the physical input (103) of the temporary input code (112) takes place in an input field and is requested and input in a manner distributed over the entire input field during use.

6. Method (1000) for performing an authentication process (3000) according to any of the preceding claims, **characterized in that**
existing authentication codes (108) can be integrated into the authentication process and can thus be retained.

7. Method (1000) for performing an authentication process (3000) according to any of the preceding claims, **characterized in that**
an individual system user (101) can already recognize, during the input prompt (111) of a requesting authentication system (100), by comparing the security fragments implemented by the individual system user (101) for the input prompt (111), whether the requesting authentication system (100) has the legitimacy to create the input prompt (111).

8. Method (1000) for performing an authentication process (3000) according to any of the preceding claims, **characterized in that**
the security fragments for the individual algorithm-based multifactor authentications (1000), depending on how the individual algorithm-based multifactor authentication (1000) is implemented by the administration (116), are generated, managed (2000) and/or executed (3000) inside and/or outside the system.

9. Method (1000) for performing an authentication process (3000) according to any of the preceding claims, **characterized in that**
the individual system user (101) generates (118) algorithm templates (125) by means of technical elements and/or aids (115) and implements the applicable authentication algorithm (107) in the authentication process (3000) in a manner adapted to his or her cognitive abilities, wherein the patterns (119) and sets of rules (120) can be individually combined with algorithm templates (125) and these algorithm templates (125) form the basis for generating (127) the algorithms (107) of the authentication process (3000).

10. Method (1000) for performing an authentication process (3000) according to any of the preceding claims, **characterized in that**
the individual system user (101) defines and/or selects (118) user data (104), algorithms (107), patterns (119), sets of rules (120), assignment levels (121), viewing levels (122), calculation rules (123), phrases (124), algorithm templates (125) and assignment patterns (126) for the purpose of generating (127) the algorithms (107).

11. Method (1000) for performing an authentication process (3000) according to any of the preceding claims, **characterized in that**
the patterns (119) consist of viewing levels (122) and assignment levels (121), wherein these assignment levels (121) include assignment patterns (126) and the sets of rules (120) consist of phrases (124) and/or calculation rules (123).

12. Method (1000) for performing an authentication process (3000) according to any of the preceding claims, **characterized in that**
an authentication algorithm (107) consists of at least one user-defined generation procedure (105) and at least one user-defined verification procedure (106).

13. Program product (115) for performing an authentication process (3000) according to the method (1000) according to any of Claims 1 to 12 for completely or partially managing and generating user data (104), algorithms (107), patterns (119), sets of rules (120), assignment levels (121), viewing levels (122), calculation rules (123), phrases (124), algorithm templates (125) and assignment patterns (126), with instructions executable by a technical security system (200) and a technical authentication system (100) and the synchronization (117) of the authentication algorithm (107) between the technical security system (200) and the authentication system (100).

14. Computer program for performing an authentication process (3000) according to the method (1000) according to any of Claims 1 to 12,
wherein the computer program runs on technical data processing machines as a technical security and authentication system (100, 200).

15. Technical construction for performing an authentication process (3000) according to the method (1000) according to any of Claims 1 to 12,
wherein the technical construction comprises mechanical and/or electronic locks and/or locking systems and the technical security and authentication systems (100), (200) for applying the individual algorithm-based multifactor authentication (1000) with access to the mechanical and/or electronic locks and/or locking systems.

## Revendications

1. Procédé (1000) pour réaliser un processus d'authentification (3000) par un utilisateur de système (101) individuel en utilisant des systèmes de sécurité techniques (200) comprenant du matériel et des logiciels pour générer, gérer et exécuter un algorithme d'authentification (107) formé de fragments de sécurité d'une authentification multifactorielle individuelle basée sur un algorithme sur un système d'authentification technique (100) qui exige une authentification, le procédé comprenant les étapes suivantes :
(a) mise en œuvre (2000) de fragments de sécurité en utilisant le système de sécurité technique (200) par un administrateur (116) et/ou un utilisateur de système (101) qui individualise le processus d'authentification au moins sous forme de motifs (119) et/ou d'ensembles de règles (120) et/ou de modèles d'algorithme (125) afin de générer un algorithme (127) pour réaliser le processus d'authentification (3000) au sein d'un système d'authentification technique (100) qui exige l'authentification (102),
(b) gestion (2000) des fragments de sécurité mis en œuvre par l'administrateur (116) et/ou l'utilisateur de système (101) individuel au sein du système de sécurité technique (200),
(c) génération (2000) de l'algorithme d'authentification (107) à partir de fragments de sécurité (119 à 126) mis en œuvre par l'utilisateur de système (101) individuel ainsi que la liaison de cet algorithme d'authentification (107) avec un code d'authentification (108) déterminé par l'utilisateur de système (101) individuel, une attribution de l'algorithme d'authentification (107) avec le code d'authentification (108) à un système d'authentification technique (100) défini étant effectuée par l'utilisateur de système (101) individuel,
(d) exécution (3000) du processus d'authentification par une légitimation (102) de l'utilisateur de système (101) individuel sur un système d'authentification technique (100) sélectionné par l'utilisateur de système (101) et exigeant une authentification (102), ainsi qu'une génération automatisée (105) de données d'authentification temporaires (109) au moyen de l'exécution de l'algorithme d'authentification (107) sur le système d'authentification technique (100) en se basant sur l'algorithme d'authentification (107) stocké dans le système de sécurité technique (200) pour ce système d'authentification technique (108) en relation avec le code d'authentification (100) ainsi que transmission à l'utilisateur de système (101) individuel, un échange de données entre le système de sécurité technique (200) qui gère l'algorithme d'authentification (107) avec le code d'authentification (108) et le système d'authentification technique (100) qui exige l'authentification étant effectué par des processus de synchronisation (117) en vue d'échanger des données non publiques,
(e) application de l'algorithme d'authentification (107) en association avec le code d'authentification (108) par l'utilisateur de système (101) individuel afin de convertir les données d'authentification temporaires (109) en un code de saisie temporaire (112) pour la saisie (103) et authentifier (3000) l'utilisateur de système (101) individuel au niveau du système d'authentification technique (100) et
(f) exécution d'un contrôle d'authentification (106) du code de saisie temporaire (112) saisi par l'utilisateur de système (101) individuel par le système de sécurité technique (200) avec prise en compte des données d'authentification temporaire (109) générées et application du code d'authentification (108) et de l'algorithme d'authentification (107) générés par l'utilisateur de système (101) individuel afin de générer un résultat temporaire (113) du contrôle d'authentification (106) pour le déclenchement d'étapes définies du déroulement du système (114) en fonction de ce résultat temporaire (113) du contrôle d'authentification (106).

2. Procédé (1000) pour réaliser un processus d'authentification (3000) selon la revendication 1, **caractérisé en ce que**
des mécanismes de sécurité cryptographique connus établis sont intégrés dans le procédé pour la mise en œuvre des fragments de sécurité et/ou la génération automatisée (2000) et/ou l'exécution (3000) des fragments de sécurité.

3. Procédé (1000) pour réaliser un processus d'authentification (3000) selon la revendication 1 ou 2, **caractérisé en ce que**
la complexité du processus d'authentification (3000) avec interaction de l'utilisateur (118) est configurée pour être évolutive et peut être déterminée par l'utilisateur de système (101) individuel lors de la mise en œuvre (2000) des fragments de sécurité (107, 119 à 126) pour l'opération d'authentification (102).

4. Procédé (1000) pour réaliser un processus d'authentification (3000) selon l'une des revendications précédentes,
**caractérisé en ce que**
un traitement de plusieurs techniques de sécurité est effectué en une seule étape en parallèle au moyen d'une saisie unique (103) de l'utilisateur de système (101) individuel.

5. Procédé (1000) pour réaliser un processus d'authentification (3000) selon l'une des revendications précédentes,
**caractérisé en ce que**
la saisie physique (103) du code de saisie temporaire (112) s'effectue sur un champ de saisie et est interrogée et saisie de manière distribuée sur l'ensemble du champ de saisie pendant l'utilisation.

6. Procédé (1000) pour réaliser un processus d'authentification (3000) selon l'une des revendications précédentes,
**caractérisé en ce que**
les codes d'authentification (108) existants peuvent être intégrés dans le processus d'authentification et peuvent ainsi être conservés.

7. Procédé (1000) pour réaliser un processus d'authentification (3000) selon l'une des revendications précédentes,
**caractérisé en ce que**
un utilisateur de système (101) individuel peut reconnaître, déjà lors de la demande de saisie (111) d'un système d'authentification (100) demandeur, par une comparaison des fragments de sécurité pour la demande de saisie (111) mis en œuvre par l'utilisateur de système (101) individuel, si le système d'authentification (100) demandeur possède la légitimité nécessaire pour créer la demande de saisie (111).

8. Procédé (1000) pour réaliser un processus d'authentification (3000) selon l'une des revendications précédentes,
**caractérisé en ce que**
les fragments de sécurité pour les authentifications multifactorielles (1000) individuelles basées sur des algorithmes sont générés, gérés (2000) et/ou exécutés (3000) en interne du système et/ou en externe du système, selon la manière dont l'authentification multifactorielle (1000) individuelle basée sur des algorithmes est mise en œuvre par l'administration (116).

9. Procédé (1000) pour réaliser un processus d'authentification (3000) selon l'une des revendications précédentes,
**caractérisé en ce que**
l'utilisateur de système (101) individuel génère (118) des modèles d'algorithme (125) au moyen d'éléments techniques et/ou d'outils (115) et met en œuvre l'algorithme d'authentification (107) à appliquer de manière adaptée à ses capacités cognitives dans le processus d'authentification (3000), les modèles (119) et les ensembles de règles (120) pouvant être combinés individuellement avec des modèles d'algorithme (125) et ces modèles d'algorithme (125) formant la base pour générer (127) les algorithmes (107) du processus d'authentification (3000).

10. Procédé (1000) pour réaliser un processus d'authentification (3000) selon l'une des revendications précédentes,
**caractérisé en ce que**
l'utilisateur de système (101) individuel définit et/ou sélectionne (118) des données utilisateur (104), des algorithmes (107), des modèles (119), des ensembles de règles (120), des niveaux d'attribution (121), des niveaux d'observation (122), des règles de calcul (123), des phrases (124), des modèles d'algorithme (125) et des modèles d'attribution (126) pour générer (127) les algorithmes (107).

11. Procédé (1000) pour réaliser un processus d'authentification (3000) selon l'une des revendications précédentes,
**caractérisé en ce que**
les modèles (119) se composent de niveaux d'observation (122) et de niveaux d'attribution (121), ces niveaux d'attribution (121) comprenant des motifs d'attribution (126) et les ensembles de règles (120) étant constitués de phrases (124) et/ou de règles de calcul (123).

12. Procédé (1000) pour réaliser un processus d'authentification (3000) selon l'une des revendications précédentes,
**caractérisé en ce que**
un algorithme d'authentification (107) se compose d'au moins une procédure de génération définie par l'utilisateur (105) et d'au moins une procédure de vérification définie par l'utilisateur (106).

13. Produit de programme (115) pour la réalisation d'un processus d'authentification (3000) conformément au procédé (1000) selon l'une des revendications 1 à 12 pour la gestion et la génération complètes ou partielles de données d'utilisateur (104), d'algorithmes (107), de modèles (119), d'ensembles de règles (120), de niveaux d'attribution (121), de niveaux d'observation (122), de règles de calcul (123), de phrases (124), de modèles d'algorithme (125) et de modèles d'attribution (126) avec des instructions exécutables par un système de sécurité technique (200) et un système d'authentification technique (100) ainsi que la synchronisation (117) de l'algorithme d'authentification (107) entre le système de sécurité technique (200) et le système d'authentification (100).

14. Programme informatique pour réaliser un processus d'authentification (3000) conformément au procédé (1000) selon l'une des revendications 1 à 12,
le programme informatique s'exécutant sur des machines techniques pour le traitement de données en tant que système technique de sécurité et d'authentification (100, 200) .

15. Construction technique pour réaliser un processus d'authentification (3000) conformément au procédé (1000) selon l'une des revendications 1 à 12,
la construction technique comprend des serrures et/ou des systèmes de blocage mécaniques et/ou électroniques ainsi que les systèmes techniques de sécurité et d'authentification (100), (200) pour appliquer l'authentification multifactorielle individuelle basée sur un algorithme (1000) avec accès aux serrures et/ou systèmes de blocage mécaniques et/ou électroniques.
